# EUROPEAN PATENT APPLICATION

(11) **EP 4 708 020 A1**
(43) Date of publication of application: **11.03.2026**
(21) Application number: 24843424.3
(22) Date of filing: 11.07.2024
(51) Int. Cl.: G06F 3/14, G06F 3/04842, H04W 4/80, G06N 3/0475

(54) **ELECTRONIC DEVICE, METHOD, AND NON-TRANSITORY COMPUTER-READABLE STORAGE MEDIUM FOR SHARING GENERATED IMAGE**

(30) Priority: 14.07.2023 KR 20230092072; 29.08.2023 KR 20230113963
(71) Applicant: Samsung Electronics Co., Ltd., Suwon-si, Gyeonggi-do 16677 (KR)
(72) Inventor: SHIN, Hyunjin, Suwon-si Gyeonggi-do 16677 (KR); KIM, Dasom, Suwon-si Gyeonggi-do 16677 (KR); KIM, Yejin, Suwon-si Gyeonggi-do 16677 (KR); SON, Dongil, Suwon-si Gyeonggi-do 16677 (KR); CHO, Pyoje, Suwon-si Gyeonggi-do 16677 (KR)
(74) Representative: Nederlandsch Octrooibureau
(86) International application number: PCT/KR2024/009946
(87) International publication number: WO 2025/018706

(57) **Abstract**

An electronic device is disclosed. The electronic device may comprise a display and may comprise at least one processor. The at least one processor may be configured to: identify content on the basis of a first user input; identify at least one external electronic device on the basis of a second user input; extract at least one prompt on the basis of the identification of the content; and obtain relationship information about a relationship between the electronic device and the at least one external electronic device. The at least one processor may be configured to generate an image on the basis of the at least one prompt and the relationship information by using a generative artificial intelligence (AI) model. The at least one processor may be configured to display a partial image of the generated image as a background screen of the display. Another partial image of the image may be displayed on the at least one external electronic device.

## Description

### [Technical Field]

The following descriptions relate to an electronic device, a method, and a non-transitory computer readable storage medium for sharing a generated image.

### [Background Art]

An electronic device may provide multiple functions. For example, the electronic device may display an image on a lock screen or a background screen. A user may set a selected image as the lock screen or the background screen of the electronic device.

### [Disclosure]

### [Technical Solution]

An electronic device is disclosed. The electronic device may include a display. The electronic device may include memory storing instructions. The electronic device may include at least one processor. The instructions may be configured to, when executed by the at least one processor, cause the electronic device to identify a content based on a first user input. The instructions may be configured to, when executed by the at least one processor, cause the electronic device to identify at least one external electronic device based on a second user input. The instructions may be configured to, when executed by the at least one processor, cause the electronic device to extract at least one prompt based on identifying the content. The instructions may be configured to, when executed by the at least one processor, cause the electronic device to obtain relationship information regarding a relationship between the electronic device and the at least one external electronic device. The instructions may be configured to, when executed by the at least one processor, cause the electronic device to, using a generative artificial intelligence (AI) model, generate an image based on the at least one prompt and the relationship information. The instructions may be configured to, when executed by the at least one processor, cause the electronic device to display a partial image of the generated image as a background screen of the display. Another partial image of the image may be configured to be displayed on the at least one external electronic device.

A method is disclosed. The method may be performed in an electronic device including a display. The method may include identifying a content based on a first user input. The method may include identifying at least one external electronic device based on a second user input. The method may include extracting at least one prompt based on identifying the content. The method may include obtaining relationship information regarding a relationship between the electronic device and the at least one external electronic device. The method may include, using a generative artificial intelligence (AI) model, generating an image based on the at least one prompt and the relationship information. The method may include displaying a partial image of the generated image as a background screen of the display. Another partial image of the image may be displayed on the at least one external electronic device.

A non-transitory computer readable storage medium is disclosed. The non-transitory computer readable storage medium may store a program including instructions. The instructions may be configured to, when executed by at least one processor, cause an electronic device to identify a content based on a first user input. The instructions may be configured to, when executed by the at least one processor, cause the electronic device to identify at least one external electronic device based on a second user input. The instructions may be configured to, when executed by the at least one processor, cause the electronic device to extract at least one prompt based on identifying the content. The instructions may be configured to, when executed by the at least one processor, cause the electronic device to obtain relationship information regarding a relationship between the electronic device and the at least one external electronic device. The instructions may be configured to, when executed by the at least one processor, cause the electronic device to, using a generative artificial intelligence (AI) model, generate an image based on the at least one prompt and the relationship information. The instructions may be configured to, when executed by the at least one processor, cause the electronic device to display a partial image of the generated image as a background screen of the display. Another partial image of the image may be displayed on the at least one external electronic device.

A server is disclosed. The server may include at least one communication circuit. The server may include memory storing instructions. The server may include at least one processor. The instructions may be configured to, when executed by the at least one processor, cause the server to obtain at least one prompt based on a content identified by a first user input of a user of an electronic device. The instructions may be configured to, when executed by the at least one processor, cause the server to obtain relationship information indicating a relationship between the electronic device and at least one external electronic device identified by a second user input of the user. The instructions may be configured to, when executed by the at least one processor, cause the server to generate an image by a generative artificial intelligence (AI) model based on the at least one prompt and the relationship information. The instructions may be configured to, when executed by the at least one processor, cause the server to transmit, through the at least one communication circuit, a partial image of the image to the electronic device, such that the electronic device displays the partial image on the electronic device. The instructions may be configured to, when executed by the at least one processor, cause the server to transmit, through the at least one communication circuit, another partial image of the image to the at least one external electronic device, such that the at least one external electronic device displays the another partial image on the at least one external electronic device.

A method is disclosed. The method may be performed in a server including at least one communication circuit. The method may include obtaining at least one prompt based on a content identified by a first user input of a user of an electronic device. The method may include obtaining relationship information indicating a relationship between the electronic device and at least one external electronic device identified by a second user input of the user. The method may include generating an image by a generative artificial intelligence (AI) model based on the at least one prompt and the relationship information. The method may include transmitting, through the at least one communication circuit, a partial image of the image to the electronic device, such that the electronic device displays the partial image on the electronic device. The method may include transmitting, through the at least one communication circuit, another partial image of the image to the at least one external electronic device, such that the at least one external electronic device displays the another partial image on the at least one external electronic device.

A non-transitory computer readable storage medium is disclosed. The non-transitory computer readable storage medium may store a program including instructions. The instructions may be configured to, when executed by at least one processor of a server including at least one communication circuit, cause the server to obtain at least one prompt based on a content identified by a first user input of a user of an electronic device. The instructions may be configured to, when executed by the at least one processor, cause the server to obtain relationship information indicating a relationship between the electronic device and at least one external electronic device identified by a second user input of the user. The instructions may be configured to, when executed by the at least one processor, cause the server to generate an image by a generative artificial intelligence (AI) model based on the at least one prompt and the relationship information. The instructions may be configured to, when executed by the at least one processor, cause the server to transmit, through the at least one communication circuit, a partial image of the image to the electronic device, such that the electronic device displays the partial image on the electronic device. The instructions may be configured to, when executed by the at least one processor, cause the server to transmit, through the at least one communication circuit, another partial image of the image to the at least one external electronic device, such that the at least one external electronic device displays the another partial image on the at least one external electronic device.

### [Description of the Drawings]

FIG. 1 is a block diagram of an electronic device in a network environment according to various embodiments.
FIG. 2 is a simplified block diagram of an electronic device according to an embodiment.
FIG. 3 illustrates an example of an operation in which an electronic device obtains an image from a content, according to an embodiment.
FIG. 4A illustrates an example of a content.
FIG. 4B illustrates an example of an image obtained from a content.
FIG. 4C illustrates an example of a region to be displayed on at least one electronic device in an image.
FIG. 4D illustrates an example of a preview image to be displayed on one electronic device based on a region.
FIG. 5A illustrates an example of an image obtained from a content.
FIG. 5B illustrates an example of an image to be displayed on an external electronic device according to a relative position with an electronic device.
FIG. 5C illustrates an example of an image to be displayed on external electronic devices according to a relative position with an electronic device.
FIG. 5D illustrates an example of an image to be displayed on external electronic devices according to a relative position with an electronic device.
FIG. 5E illustrates an example of an image to be displayed on external electronic devices according to a relative position with an electronic device.
FIG. 6A illustrates an example of an image obtained from a content.
FIG. 6B illustrates an example of an image to be displayed on an external electronic device according to a relative position with an electronic device.
FIG. 6C illustrates an example of an image to be displayed on an external electronic device according to a relative position with an electronic device.
FIG. 7A illustrates an example of an operation in which an electronic device shares data with another electronic device.
FIG. 7B illustrates an example of an operation in which an electronic device shares data with another electronic device.
FIG. 8A illustrates an example of an image generated based on contents selected from a plurality of electronic devices.
FIG. 8B illustrates an example of an image generated based on contents selected from a plurality of electronic devices.
FIG. 9 illustrates an example of an operation of selecting one of a plurality of images in an electronic device.
FIG. 10A is a simplified block diagram of an electronic device according to an embodiment.
FIG. 10B is a simplified block diagram of an electronic device according to an embodiment.
FIG. 10C is a simplified block diagram of an electronic device according to an embodiment.
FIG. 11 is a flowchart exemplifying an operation performed by an electronic device according to an embodiment.
FIG. 12 is a flowchart exemplifying an operation performed by an electronic device according to an embodiment.
FIG. 13 is a flowchart exemplifying an operation performed by an electronic device according to an embodiment.
FIG. 14 is a flowchart exemplifying an operation performed by an electronic device according to an embodiment.

### [Mode for Invention]

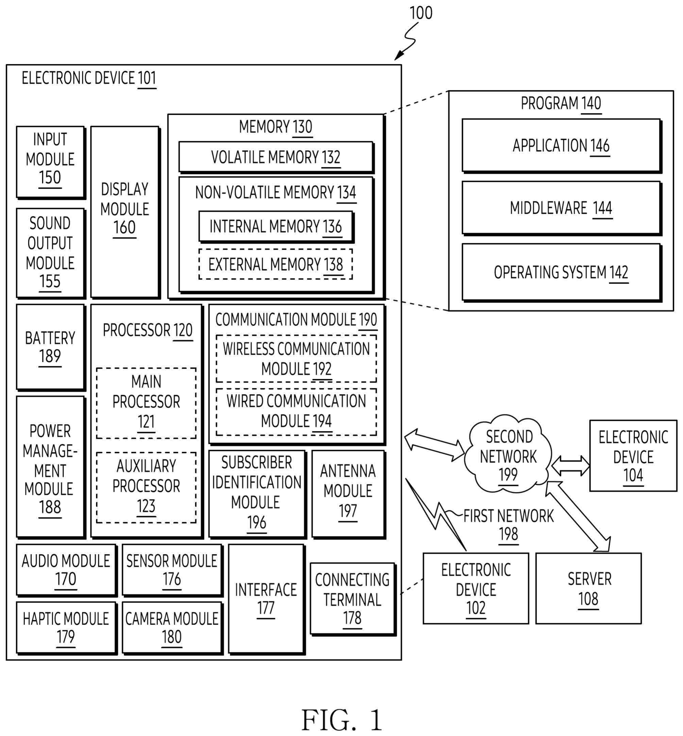

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

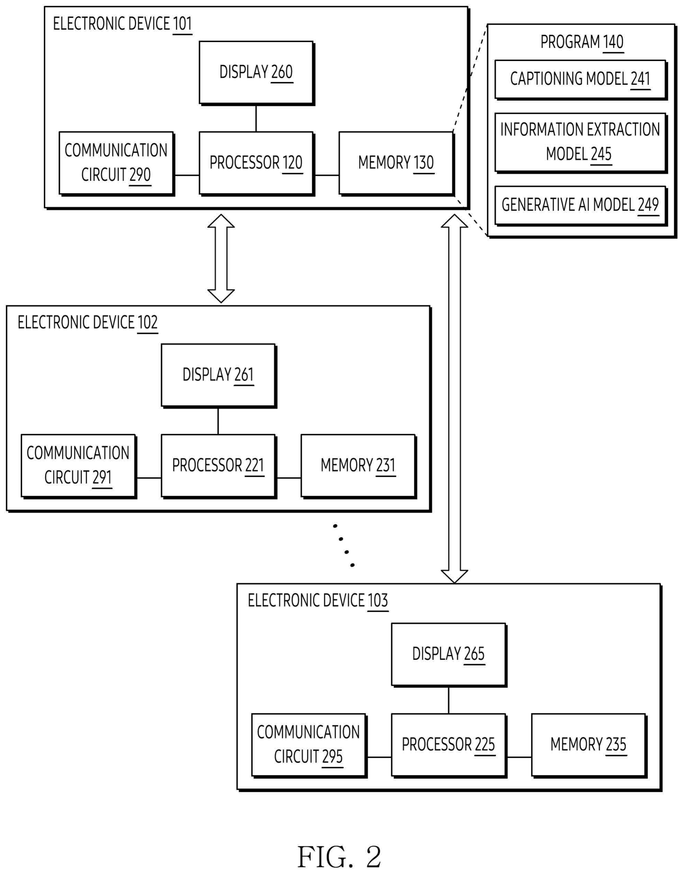

FIG. 2 is a simplified block diagram of an electronic device according to an embodiment.

FIG. 2 may be described with reference to the components described through FIG. 1.

Referring to FIG. 2, an electronic device 101 may include a processor 120, memory 130, a display 260, and a communication circuit 290. The memory 130 may include a program 140. For example, the program 140 may include a captioning model 241, an information extraction model 245, and a generative artificial intelligence (AI) model 249.

The electronic device 101 of FIG. 2 may correspond to the electronic device 101 described with reference to FIG. 1. The processor 120 of FIG. 2 may correspond to the processor 120 described with reference to FIG. 1. The memory 130 of FIG. 2 may correspond to the memory 130 described with reference to FIG. 1. The memory program 140 of FIG. 2 may correspond to the program 140 described with reference to FIG. 1. The display 260 of FIG. 2 may correspond to the display module 160 described with reference to FIG. 1. The communication circuit 290 of FIG. 2 may correspond to the communication module 190 described with reference to FIG. 1. The memory 130 may include the program 140.

The electronic device 101 may be connected to an electronic device 102 and/or an electronic device 103. For example, the electronic device 101 may be connected to the electronic device 102 and/or the electronic device 103 based on a wired communication connection and/or a wireless communication connection through the communication circuit 290. In an embodiment, the electronic device 102 and/or the electronic device 103 may be positioned outside the electronic device 101. For example, the electronic device 102 and/or the electronic device 102 may be positioned physically separated from the electronic device 101. Hereinafter, the electronic device 102 may be referred to as an external electronic device of the electronic device 101. In an embodiment, the electronic device 103 may be referred to as an external electronic device of the electronic device 101.

The electronic device 101 may execute the captioning model 241, the information extraction model 245, and the generative AI model 249. For example, the electronic device 101 may execute instructions included in the captioning model 241, the information extraction model 245, and/or the generative AI model 249 through the processor 120.

For example, the electronic device 102 may include a processor 221, memory 231, a display 261, and a communication circuit 291.

The electronic device 102 of FIG. 2 may correspond to the electronic device 102 and/or the electronic device 104 described with reference to FIG. 1. The processor 221 may correspond to the processor 120 described with reference to FIG. 1. The memory 231 may correspond to the memory 130 described with reference to FIG. 1. The display 261 may correspond to the display module 160 described with reference to FIG. 1. The communication circuit 291 may correspond to the communication module 190 described with reference to FIG. 1.

For example, the electronic device 103 may include a processor 225, memory 235, a display 265, and a communication circuit 295.

The electronic device 103 of FIG. 2 may correspond to the electronic device 102 and/or the electronic device 104 described with reference to FIG. 1. The processor 225 may correspond to the processor 120 described with reference to FIG. 1. The memory 235 may correspond to the memory 130 described with reference to FIG. 1. The display 265 may correspond to the display module 160 described with reference to FIG. 1. The communication circuit 295 may correspond to the communication module 190 described with reference to FIG. 1.

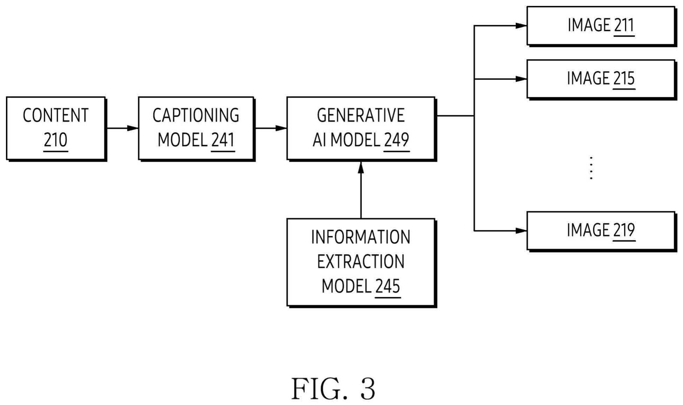

FIG. 3 illustrates an example of an operation in which an electronic device obtains an image from a content, according to an embodiment.

FIG. 3 may be described with reference to the components described through FIGS. 1 and 2.

In an embodiment, a processor 120 may identify a content 210. For example, the processor 120 may identify the content 210 indicated by a user input. For example, the processor 120 may identify the content 210 indicated by a touch input of a user. However, it is not limited thereto. For example, the processor 120 may identify the content 210 indicated by an input obtained through an input module 150. For example, the content 210 may include an image. However, it is not limited thereto. For example, the content 210 may be at least one of text, audio, a still image, or a video. Hereinafter, identify may be replaced with another expression (e.g., detect, recognize, determine, or sense).

In an embodiment, the processor 120 may identify two or more contents. For example, two or more contents may be selected from different electronic devices. For example, any one content among two or more contents may be selected by an electronic device 101, and another content may be selected by an electronic device 102.

In an embodiment, the processor 120 may obtain information based on the content 210. The processor 120 may identify information based on the content 210. The processor 120 may extract information from the content 210. For example, the processor 120 may extract (or obtain or identify) information from the content 210 based on a captioning model 241. For example, the processor 120 may extract at least one prompt from the content 210 based on the captioning model 241. For example, the prompt may be a set of words. The prompt may be a set of words that may be extracted from the content 210. For example, the prompt may include at least one word indicating an object that may be extracted from the content 210. The prompt may include at least one keyword that may be extracted from the content 210. For example, the keyword may be a word for describing at least one object, and/or the content 210. For example, the keyword may be a word that describes a state or a property of at least one object (e.g., lyrical or dreamy). For example, the keyword may be a word that describes a movement or an action of at least one object (e.g., surfing, tracking, or swimming). For example, a keyword may include a word such as a word that describes a state or a property of the content 210 (e.g., celestial image, rural landscape, or beach). For example, the keyword may include a word indicating at least one color tone (e.g., black and white). In an embodiment, the prompt may be at least one sentence in which words are listed. For example, in a case that the content 210 is an image of a landscape including a full moon, the prompt may be a sentence such as "a dreamy black-and-white image of people standing on a hill looking at the moon". However, it is not limited thereto.

For example, in a case that the content 210 is an image, the processor 120 may extract information from the content 210 based on the captioning model 241 capable of image captioning. For example, the captioning model 241 may include at least one of an image captioning model or a video captioning model. For example, captioning may refer to a task of extracting words (or sentences) to describe an image (or a video) from the image (or the video). However, it is not limited thereto. For example, the captioning model 241 may provide a text summarization function for summarizing text. The text summarization function may refer to a function of generating at least one sentence summarizing one or more sentences.

For example, information may include metadata of the content 210. For example, it may include at least one of an obtaining time of the content 210, an obtaining place of the content 210, or tag information of at least one object included in the content 210. For example, in a case that the content 210 is an image, the obtaining place of the content 210 may mean a photographing place of the image. For example, in a case that the content 210 is an image, the tag information of the content 210 may include identification information of at least one object included in the image. For example, the identification information may include information regarding at least one of a name or a relationship of the at least one object.

In an embodiment, the processor 120 may extract information from each of the two or more contents 210. For example, the processor 120 may identify at least one prompt from each of the two or more contents 210.

In an embodiment, the processor 120 may identify at least one electronic device 102 and 103 peripheral to the electronic device 101. For example, the processor 120 may identify the at least one peripheral electronic device 102 and 103 based on a short-range wireless communication protocol using a communication circuit 290. However, it is not limited thereto. For example, the processor 120 may identify the at least one electronic device 102 and 103 logged into a user account of the user of the electronic device 101. The processor 120 may identify the at least one electronic device 102 and 103 logged into the user account of the user of the electronic device 101 based on login information obtained from a server 108. In an embodiment, the processor 120 may identify the at least one electronic device 102 and 103 registered in a contact list of the electronic device 101. For example, the processor 120 may identify the at least one electronic device 102 and 103 indicated by an input. For example, the processor 120 may identify the at least one electronic device 102 and 103 indicated by the input among a plurality of electronic devices registered in the contact list. For example, the processor 120 may identify the at least one electronic device 102 and 103 indicated by an input (e.g., a touch input) of the user.

In an embodiment, the processor 120 may identify device information of the electronic device 101 and/or the at least one electronic device 102 and 103. The processor 120 may identify the device information of the electronic device 101 and/or the at least one electronic device 102 and 103 based on an information extraction model 245. For example, the device information may include information related to a display 160 (e.g., resolution) of the electronic device 101. The device information may include information related to displays 261 and 265 (e.g., resolution) of the at least one electronic device 102 and 103.

In an embodiment, the processor 120 may identify information indicating a relationship between the electronic device 101 and the at least one electronic device 102 and 103. The processor 120 may identify the information indicating the relationship between the electronic device 101 and the at least one electronic device 102 and 103 based on the information extraction model 245. For example, the information indicating the relationship may include information indicating a positional relationship between the electronic device 101 and the at least one electronic device 102 and 103. The electronic device 101 may identify the information indicating the positional relationship based on information for positioning included in a packet (e.g., a packet based on Bluetooth low energy (BLE) and/or an ultra wide band (UWB)) transmitted from the at least one electronic device 102 and 103. For example, the electronic device 101 may identify information indicating a relative positional relationship between the electronic device 101 and the at least one electronic device 102 and 103 based on information for positioning included in the packet (e.g., BLE and/or UWB) transmitted from the at least one electronic device 102 and 103.

For example, the information indicating the relationship may include information indicating a frequency of contact between the user of the electronic device 101 and a user of the at least one electronic device 102 and 103. For example, the information indicating the relationship may include information indicating a relationship between the user of the electronic device 101 and the user of the at least one electronic device 102 and 103. In an embodiment, the relationship between the user of the electronic device 101 and the user of the at least one electronic device 102 and 103 may be included in one of one or more categories. For example, the one or more categories may include at least one of a lover, a couple, a family, a friend, a colleague, or an acquaintance. Hereinafter, the information indicating the relationship between the electronic device 101 and the at least one electronic device 102 and 103 may be referred to as relationship information.

For example, the processor 120 may identify whether a relationship between the user of the electronic device 101 and another user of the at least one electronic device 102 and 103 is set. In a case that the relationship is set, the processor 120 may obtain the set relationship as the relationship information. In a case that the relationship is not set, the processor 120 may obtain other relationship information between the electronic device 101 and the at least one electronic device 102 and 103. For example, the processor 120 may obtain the relationship information based on at least one of a frequency of physical proximity, a length of physical proximity time, the application being executed, or a message content, between the electronic device 101 and the at least one electronic device 102 and 103. For example, in a case that the frequency of physical proximity between the electronic device 101 and the at least one electronic device 102 and 103 is five times a week, the length of physical proximity time is less than or equal to a predetermined time length (e.g., 3 hours), and the message content is not related to work or a romantic relationship, the processor 120 may set the user and the other user as a fellow member relationship. For example, in a case that the frequency of physical proximity between the electronic device 101 and the at least one electronic device 102 and 103 is twice a week, the length of physical proximity time is more than the predetermined time length (e.g., 3 hours), a camera application is executed during physical proximity, a call duration exceeds a reference time length (e.g., 10 minutes), and the message content is related to the romantic relationship, the processor 120 may set the user and the other user as a lover relationship. For example, in a case that the frequency of physical proximity between the electronic device 101 and the at least one electronic device 102 and 103 is five times a week, the length of physical proximity time is more than or equal to the predetermined time length (e.g., 3 hours), and the message content is not related to work or the romantic relationship, the processor 120 may set the user and the other user as a family relationship. For example, the processor 120 may determine a case in which it is within a specified distance range (e.g., 30 meters) as the physical proximity.

In an embodiment, the processor 120 may generate at least one image 211, 215, and 219. For example, the processor 120 may generate the at least one image 211, 215, and 219 based on the at least one prompt extracted from the content 210. For example, the processor 120 may generate the at least one image 211, 215, and 219 based on the relationship information. For example, the processor 120 may generate the at least one image 211, 215, and 219 based on the at least one prompt and the relationship information.

In an embodiment, the processor 120 may generate the at least one image 211, 215, and 219 by using a generative AI model 245. For example, the processor 120 may generate the at least one image 211, 215, and 219 by inputting the at least one prompt to the generative AI model 245. For example, the processor 120 may generate the at least one image 211, 215, and 219 by inputting the relationship information to the generative AI model 295. For example, the processor 120 may generate the at least one image 211, 215, and 219 by inputting the at least one prompt and the relationship information to the generative AI model 249. For example, the at least one prompt may include at least some of the words extracted from the content 210.

In an embodiment, the processor 120 may generate the at least one image 211, 215, and 219 based on the content 210. For example, the processor 120 may generate the at least one image 211, 215, and 219 by inputting the content 210 to the generative AI model 249. For example, the processor 120 may generate the at least one image 211, 215, and 219 by inputting the content 210, the at least one prompt, and the relationship information to the generative AI model 249. For example, in a case that the content 210 is an image, the processor 120 may generate the at least one image 211, 215, and 219 including the content 210. In a case that the content 210 is an image, the processor 120 may generate the at least one image 211, 215, and 219 extending from the content 210.

In an embodiment, the processor 120 may generate the at least one image 211, 215, and 219 based on the two or more contents 210. For example, the processor 120 may generate the at least one image 211, 215, and 219 by inputting the at least one prompt extracted from the two or more contents 210 to the generative AI model 249.

In an embodiment, the processor 120 may display the at least one image 211, 215, and 219 on a display 260. For example, the processor 120 may display an image selected from the at least one image 211, 215, and 219 on the display 260. For example, the processor 120 may display an image selected based on a user input among the at least one image 211, 215, and 219 on the display 260. Hereinafter, display may be replaced with another expression (e.g., output, dispose, represent, or render).

In an embodiment, the processor 120 may display the at least one image 211, 215, and 219 on the at least one electronic device 102 and 103. For example, the processor 120 may display an image selected from the at least one image 211, 215, and 219 on the display 260 of the at least one electronic device 102 and 103. For example, the processor 120 may display an image selected based on the user input among the at least one image 211, 215, and 219 on the display 260. Hereinafter, it is assumed that the first image 211 is selected from the at least one image 211, 215, and 219.

In an embodiment, the processor 120 may display a partial region of the first image 211 selected from the at least one image 211, 215, and 219 on the display 260. Hereinafter, the partial region may be referred to as a partial image. The partial image may correspond to the content 210. For example, in a case that the content 210 is an image, a region including the content 210 in the first image 211 may be a partial image to be displayed on the display 260.

In an embodiment, the processor 120 may identify a partial region of the first image 211 based on the device information of the electronic device 101. For example, the processor 120 may identify the partial region of the first image 211 selected from the at least one image 211, 215, and 219 based on the information related to the display 160 (e.g., the resolution) of the electronic device 101. For example, the processor 120 may identify the partial region corresponding to the resolution of the display 160 in the selected first image 211 based on information related to the display 160 (e.g., the resolution) of the electronic device 101. For example, the processor 120 may select the partial region including at least a portion of the content 210 in the selected first image 211 based on information related to the display 160 (e.g., the resolution).

In an embodiment, the processor 120 may display at least one other partial region of the first image 211 selected from the at least one image 211, 215, and 219 on the at least one electronic device 102 and 103. For example, the processor 120 may transmit the at least one other partial region to the at least one electronic device 102 and 103 such that the at least one other partial region of the first image 211 selected from the at least one image 211, 215, and 219 is displayed. Hereinafter, another partial region may be referred to as another partial image.

In an embodiment, another partial image may be identified based on the relationship information. For example, the processor 120 may identify at least one other partial image to be displayed on the at least one electronic device 102 and 103 based on the position information indicating the positional relationship between the electronic device 101 and the at least one electronic device 102 and 103. For example, in a case that the at least one electronic device 102 and 103 is positioned on a left side of the electronic device 101, the processor 120 may identify the at least one other partial image on a left side portion of the partial image. For example, in a case that the at least one electronic device 102 and 103 is positioned on a right side of the electronic device 101, the processor 120 may identify the at least one other partial image on a right side portion of the partial image.

In an embodiment, the processor 120 may identify the at least one other partial image based on the position information and/or the information related to the displays 261 and 265 (e.g., the resolution) of the at least one electronic device 102 and 103. For example, in a case that the at least one electronic device 102 and 103 is positioned on the left side of the electronic device 101, the processor 120 may identify a region corresponding to the resolution of the displays 261 and 265 in a left side portion of the partial image of the first image 211 as the at least one other partial image. For example, in a case that the at least one electronic device 102 and 103 is positioned on the right side of the electronic device 101, the processor 120 may identify a region corresponding to the resolution of the displays 261 and 265 in a right side portion of the partial image of the first image 211 as the at least one other partial image.

According to an embodiment, the processor 120 may identify a region to be displayed on the display 260 for each of the at least one image 211, 215, and 219 and at least one other region to be displayed on the at least one electronic device 102 and 103. At least one preview image including the region to be displayed on the display 260 and the at least one other region to be displayed on the at least one electronic device 102 and 103 may be displayed on the display 260. Thereafter, in response to a user input of selecting one preview image among the at least one preview image, the processor 120 may display a partial image of an image corresponding to the selected preview image on the display 230, and transmit at least one other partial image of the image to the at least one electronic device 102 and 103.

As described above, the electronic device 101 may provide an enhanced user experience to the user by sharing an image generated based on the content 210 selected by the user to the at least one electronic device 102 and 103. The electronic device 101 may uniformly display the image generated based on the content 210 selected by the user as a lock screen, a home screen, or a wallpaper of the electronic device 101 and the at least one electronic device 102 and 103. For example, the same or similar lock screen, home screen, or wallpaper may be employed for electronic devices of lovers. For example, the same or similar lock screen, home screen, or wall paper may be employed on a plurality of electronic devices of one user. In an embodiment, the lock screen is a screen displayed on the electronic device 101 in a state where performance of a specific operation (e.g., phone call, or execution of a web browser) of the electronic device 101 is restricted by a user input before user authentication. The home screen is a screen displayed on the electronic device 101 in an idle state where an application is not executed in a foreground. A background screen may be referred to as the wallpaper, and may be a display image displayed on the electronic device 101 as a background image on the lock screen and the home screen.

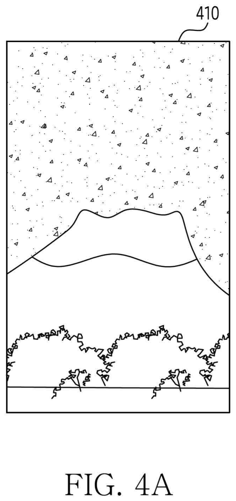

FIG. 4A illustrates an example of a content.

FIG. 4A may be described with reference to the components described through FIGS. 1, 2, and 3.

In an embodiment, a processor 120 may identify a content 410. For example, the content 410 may be a content indicated by a user input. For example, the content 410 may be a content indicated by the user input among one or more images being displayed through a gallery application. However, it is not limited thereto. The content 410 may be obtained from external electronic devices 102 and 103.

In an embodiment, the processor 120 may obtain at least one prompt from the content 410. For example, the processor 120 may identify the at least one prompt from the content 410 through a captioning model 241. The processor 120 may extract the at least one prompt related to the content 410 by inputting the content 410 to the captioning model 241. For example, the at least one prompt may include a word and a keyword for an object.

For example, the processor 120 may extract at least one word for at least one object included in the content 410 based on the captioning model 241. For example, the at least one word may include at least one of a snow mountain, milky way, sky, a forest, or a lake.

For example, the processor 120 may extract at least one keyword for the content 410 based on the captioning model 241. For example, the at least one keyword may include a word (e.g., sunset, darkness, or scenery) describing a state or a property of at least one object. For example, a keyword may include a word (e.g., silence) that describes a movement or an action of at least one object.

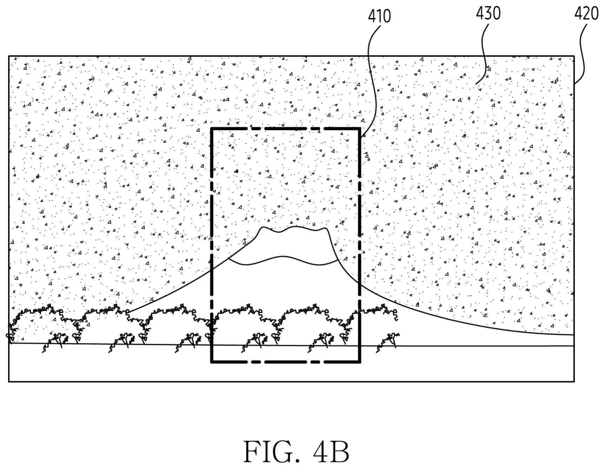

FIG. 4B illustrates an example of an image obtained from a content.

FIG. 4B may be described with reference to the components described through FIGS. 1, 2, and 3.

In an embodiment, a processor 120 may obtain an image 420 using a generative AI model 249. For example, the processor 120 may obtain the image 420 based on a content 410. For example, the processor 120 may obtain the image 420 based on at least one prompt of the content 410. For example, the processor 120 may obtain the image 420 based on the content 410 and the at least one prompt.

In an embodiment, the processor 120 may obtain the image 420 based on relationship information and the content 410. For example, the processor 120 may obtain the image 420 based on the at least one prompt of the content 410 and the relationship information. For example, the processor 120 may obtain the image 420 based on two or more contents and at least one prompt of each of the two or more contents. For example, the processor 120 may obtain the image 420 based on the relationship information, the two or more contents, and the at least one prompt of each of the two or more contents.

For example, the processor 120 may generate the image 420 including the content 410. For example, the processor 120 may out-draw the content 410 based on information related to the content 410. For example, the processor 120 may generate the image 420 based on out-drawing that draws a region other than the content 410. For example, referring to FIG. 4B, a region 430 of the image 420 may be a region (or an extended region) out-drawn from the content 410. The region 430 except for the image 420 of the content 410 may be generated by the generative AI model 249.

For example, the processor 120 may generate another image distinct from the content 410. For example, the processor 120 may generate a new image based on the information related to the content 410. The new image generated based on the information related to the content 410 may be distinct from the content 410. For example, a distinction between images may mean that they do not include the same region. The distinction between images may mean that a region of the content 410 is not included in the new image.

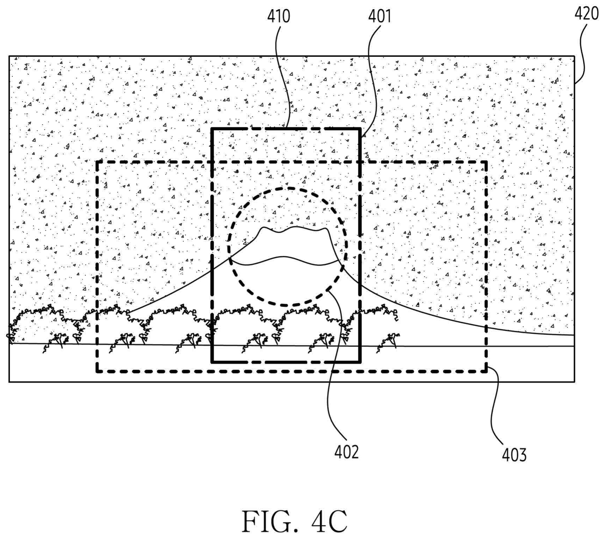

FIG. 4C illustrates an example of a region to be displayed on at least one electronic device in an image.

FIG. 4C may be described with reference to the components described through FIGS. 1, 2, and 3.

In an embodiment, a processor 120 may identify regions 401, 402, and 403 to be displayed on electronic devices 101, 102, and 103 in an image 420.

In an embodiment, the processor 120 may identify a partial image to be displayed on a display 260 in the image 420 based on a content 410. For example, the processor 120 may identify a region including the content 410 in the image 420 as a partial image 401 to be displayed on the display 260. For example, the processor 120 may identify a region having a size corresponding to resolution of a display 101 of the electronic device 101 including at least a portion of the image content 410 in the image 420 as the partial image 401 to be displayed on the display 260. However, it is not limited thereto. For example, the processor 120 may identify the partial image 401 to be displayed on the display 260 in the image 420 based on a word indicating an object among words included in a prompt. For example, the partial image 401 to be displayed on the display 260 may be identified based on at least one word (snow mountain, milky way, sky, forest, or lake) indicating an object among the words included in the prompt. For example, the processor 120 may identify the partial image 401 to be displayed on the display 260 based on a selected word (e.g., snow mountain) among at least one word indicating an object. For example, the processor 120 may identify the partial image 401 including the object indicated by the selected word (e.g., snow mountain) as a region to be displayed on the display 260.

In an embodiment, the processor 120 may identify other partial images 402 and 403 to be displayed on the electronic devices 102 and 103 in the image 420 based on the content 410. For example, the processor 120 may identify the other partial images 402 and 403 to be displayed on the electronic devices 102 and 103 in the image 420 based on information extracted from the content 210. For example, the processor 120 may identify the other partial images 402 and 403 to be displayed on the electronic devices 102 and 103 in the image 420 based on a word indicating an object among the words included in the prompt. For example, the other partial images 402 and 403 to be displayed on the electronic devices 102 and 103 may be identified based on at least one word (snow mountain, milky way, sky, forest, or lake) indicating an object among the words included in the prompt. For example, the processor 120 may identify the other partial images 402 and 403 to be displayed on the electronic devices 102 and 103 based on a selected word (e.g., snow mountain) among at least one word indicating an object. For example, the processor 120 may identify regions including the object indicated by the selected word (e.g., snow mountain) as the other partial images 402 and 403 to be displayed on the electronic devices 102 and 103.

In an embodiment, based on the content 410, the processor 120 may identify a region having a size corresponding to resolution of displays 261 and 265 of the electronic devices 102 and 103 in the image 420 as the other partial images 402 and 403 to be displayed on the electronic devices 102 and 103.

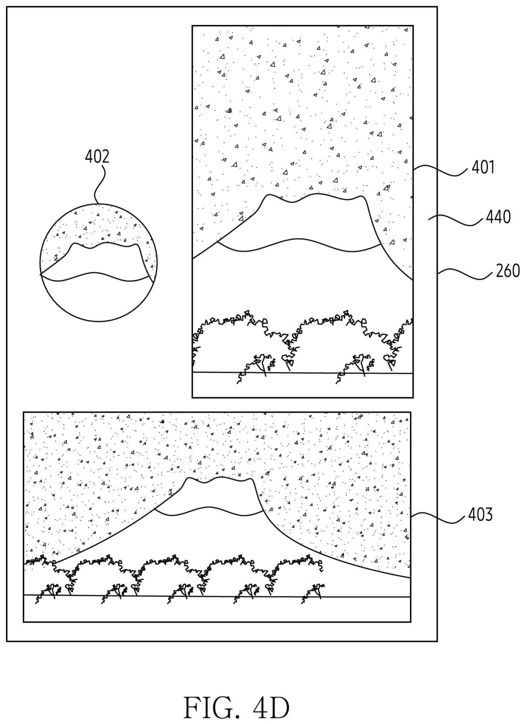

FIG. 4D illustrates an example of a preview image to be displayed on one electronic device based on a region.

FIG. 4D may be described with reference to the components described through FIGS. 1, 2, and 3.

According to an embodiment, a processor 120 may display a preview image 440 on a display 260. For example, the preview image 440 may include partial images 401, 402, and 403. The preview image 440 may indicate a state where the partial image 401 is displayed on the display 260 and the other partial images 402 and 403 are respectively displayed on other electronic devices 102 and 103. For example, the partial image 401 may correspond to an image to be displayed on the display 260 of an electronic device 101. For example, the other partial image 402 may correspond to an image to be displayed on a display 261 of the electronic device 102. For example, the other partial image 403 may correspond to an image to be displayed on a display 265 of the electronic device 103.

In an embodiment, the processor 120 may display the partial image 401 in response to an input. For example, the processor 120 may display the partial image 401 as a home screen. For example, the processor 120 may display the partial image 401 as a lock screen. For example, the processor 120 may display the partial image 401 as a wallpaper. For example, the input may be a user input. For example, the input may be a user input that approves the display of the partial image 401.

In an embodiment, the processor 120 may transmit at least one of the other partial image 402 and 403 in response to an input.

For example, the processor 120 may transmit the other partial image 402 to the electronic device 102 using a communication circuit 290. For example, the processor 120 may transmit data that includes a command instructing to display the other partial image 402 as a home screen to the electronic device 102. For example, the processor 120 may transmit data that includes a command instructing to display the other partial image 402 as a lock screen to the electronic device 102. For example, the processor 120 may transmit data that includes a command instructing to display the other partial image 402 as a wallpaper to the electronic device 102. For example, the input may be a user input. For example, the input may be a user input that approves transmission of the other partial image 402.

For example, the processor 120 may transmit the other partial image 403 to the electronic device 103 using the communication circuit 290. For example, the processor 120 may transmit data that includes a command instructing to display the other partial image 403 as a home screen to the electronic device 103. For example, the processor 120 may transmit data that includes a command instructing to display the other partial image 403 as a lock screen to the electronic device 103. For example, the processor 120 may transmit data that includes a command instructing to display the other partial image 403 as a wallpaper to the electronic device 103. For example, the input may be a user input. For example, the input may be a user input that approves transmission of the other partial image 403.

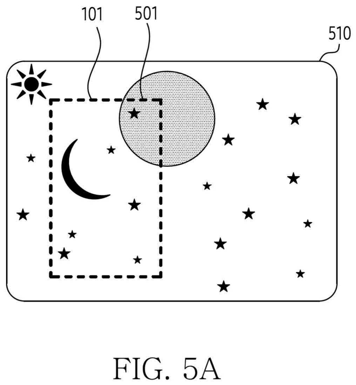

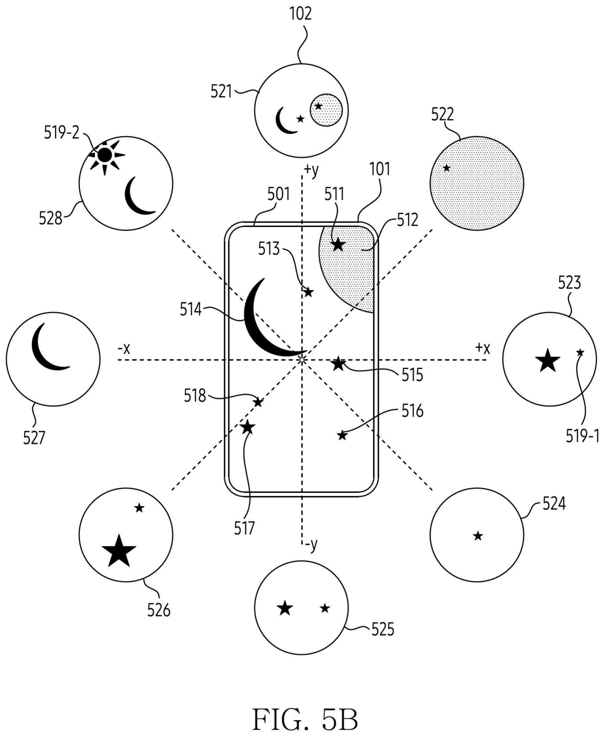

FIG. 5A illustrates an example of an image obtained from a content. FIG. 5B illustrates an example of an image to be displayed on an external electronic device according to a relative position with an electronic device.

FIGS. 5A and 5B may be described with reference to the components described through FIGS. 1, 2, and 3.

Referring to FIG. 5A, in an embodiment, an image 510 may be an image generated using a generative AI model 249. For example, a partial image 501 may be a region displayed on a display 260 of an electronic device 101 among the image 510.

In an embodiment, a processor 120 may identify a region to be displayed on an electronic device 102 based on a position of the electronic device 102. For example, the processor 120 may identify the region to be displayed on the electronic device 102 based on a relative position of the electronic device 102 in the partial image 501 to be displayed on the electronic device 101. However, it is not limited thereto. For example, the processor 120 may identify the region to be displayed on the electronic device 102 based on a relative position of the electronic device 102 in the image 510 based on the partial image 501 to be displayed on the electronic device 101. For example, the processor 120 may identify the region to be displayed on the electronic device 102 based on a position of the electronic device 102 in a coordinate space centered on the electronic device 101.

For example, the processor 120 may identify another partial image based on a region including at least one object corresponding to the relative position of the electronic device 102 among a plurality of objects 511, 512, 513, 514, 515, 516, 517, and 518 included in the partial image 501. In an embodiment, the processor 120 may generate the other partial image in the image 510. The processor 120 may generate the other partial image based on the relative position of the electronic device 102 in the image 510. For example, based on the relative position of the electronic device 102, the processor 120 may generate the other partial image such that at least one other object 519-1 and 519-2 not included in the partial image 501 is included in the other partial image. For example, the processor 120 may generate the other partial image such that the at least one other object 519-1 and 519-2 not included in the partial image 501 is included in the other partial image.

For example, in a case that the electronic device 102 is positioned on an upper side (e.g., a region in a +y-axis direction) of the electronic device 101, the processor 120 may identify another partial image 521 based on a region positioned on an upper side based on the partial image 501 in the image 510. For example, in a case that the electronic device 102 is positioned on the upper side of the electronic device 101, the processor 120 may identify the other partial image 521 based on a region including the objects 511, 512, 513, and 514 positioned on the upper side based on the partial image 501 in the image 510. For example, a relative position between the electronic device 101 and the electronic device 102 may be determined based on a direction in which the display 260 of the electronic device 101 faces.

For example, in a case that the electronic device 102 is positioned on an upper right side (e.g., a region in a +x-axis direction and the +y-axis direction) of the electronic device 101, the processor 120 may identify another partial image 522 based on a region positioned on an upper right side based on the partial image 501 in the image 510. For example, in a case that the electronic device 102 is positioned on the upper right side of the electronic device 101, the processor 120 may identify the other partial image 522 based on a region including the objects 511 and 512 positioned on the upper right side based on the partial image 501 in the image 510.

For example, in a case that the electronic device 102 is positioned on a right side (e.g., a region in the +x-axis direction) of the electronic device 101, the processor 120 may identify another partial image 523 based on a region positioned on a right side based on the partial image 501 in the image 510. For example, in a case that the electronic device 102 is positioned on the right side of the electronic device 101, the processor 120 may identify the other partial image 523 based on a region including the objects 515 and 519-1 positioned on the right side based on the partial image 501 in the image 510. For example, the object 519-1 may be not included in the partial image 501, but may be an object positioned on the right side (e.g., in the +x-axis direction) based on the partial image 501 in the image 510.

For example, in a case that the electronic device 102 is positioned on a lower right side (e.g., a region in the +x-axis direction and a -y-axis direction) of the electronic device 101, the processor 120 may identify another partial image 524 based on a region positioned on a lower right side based on the partial image 501 in the image 510. For example, in a case that the electronic device 102 is positioned in the lower right side of the electronic device 101, the processor 120 may identify the other partial image 524 based on a region including the object 516 positioned on the lower right side based on the partial image 501 in the image 510.

For example, in a case that the electronic device 102 is positioned on a lower side (e.g., a region in the -y-axis direction) of the electronic device 101, the processor 120 may identify another partial image 525 based on a region positioned on a lower side based on the partial image 501 in the image 510. For example, in a case that the electronic device 102 is positioned on the lower side of the electronic device 101, the processor 120 may identify the other partial image 525 based on a region including the objects 516 and 517 positioned on the lower side based on the partial image 501 in the image 510.

For example, in a case that the electronic device 102 is positioned on a lower left side (e.g., a region in a -x-axis direction and -y-axis direction) of the electronic device 101, the processor 120 may identify another partial image 526 based on a region positioned on a lower left side based on the partial image 501 in the image 510. For example, in a case that the electronic device 102 is positioned on the lower left side of the electronic device 101, the processor 120 may identify the other partial image 526 based on a region including the objects 517 and 518 positioned on the lower left side based on the partial image 501 in the image 510.

For example, in a case that the electronic device 102 is positioned on a left side (e.g., a region in the -x-axis direction) of the electronic device 101, the processor 120 may identify another partial image 527 based on a region positioned on a left side based on the partial image 501 in the image 510. For example, in a case that the electronic device 102 is positioned on the left side of the electronic device 101, the processor 120 may identify the other partial image 527 based on a region including the object 514 positioned on the left side based on the partial image 501 in the image 510.

For example, in a case that the electronic device 102 is positioned on an upper left side (e.g., a region in the -x-axis direction and the +y-axis direction) of the electronic device 101, the processor 120 may identify another partial image 528 based on a region positioned on an upper left side based on the partial image 501 in the image 510. For example, in a case that the electronic device 102 is positioned on the upper left side of the electronic device 101, the processor 120 may identify the other partial image 528 based on a region including the objects 514 and 519-2 positioned on the upper left side based on the partial image 501 in the image 510. However, it is not limited thereto. For example, the object 519-2 may be not included in the partial image 501, but may be an object positioned on the upper left side based on the partial image 501 in the image 510.

For example, the processor 120 may identify the region to be displayed on the electronic device 102 in the image 510 based on a distance between the electronic device 101 and the electronic device 102. For example, the processor 120 may identify the region to be displayed on the electronic device 102 in the image 510 based on the distance and a position between the electronic device 101 and the electronic device 102. However, it is not limited thereto. For example, the processor 120 may generate an image to be displayed on the electronic device 102 by using at least one object corresponding to the position of the electronic device 102 among objects of the image 510. For example, the processor 120 may identify at least one keyword through the at least one object corresponding to the position of the electronic device 102. For example, a keyword for the at least one object corresponding to the position of the electronic device 102 may be a word describing a state, a disposition, or a property of the at least one object. For example, the processor 120 may generate the image to be displayed on the electronic device 102 by inputting a prompt based on the at least one keyword to a generative AI model 245.

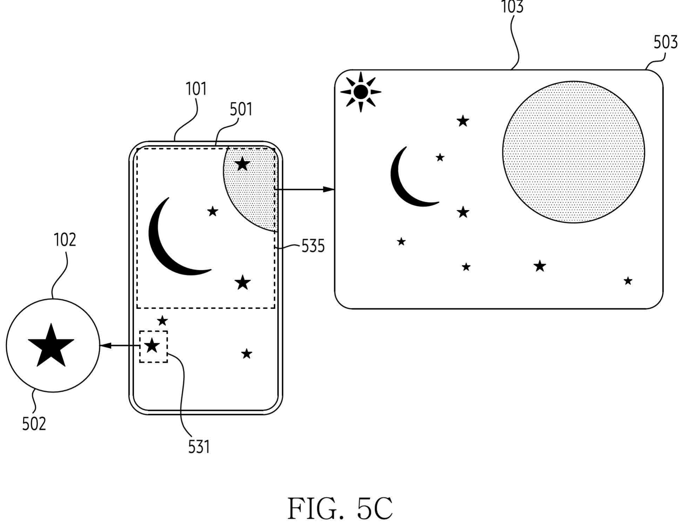

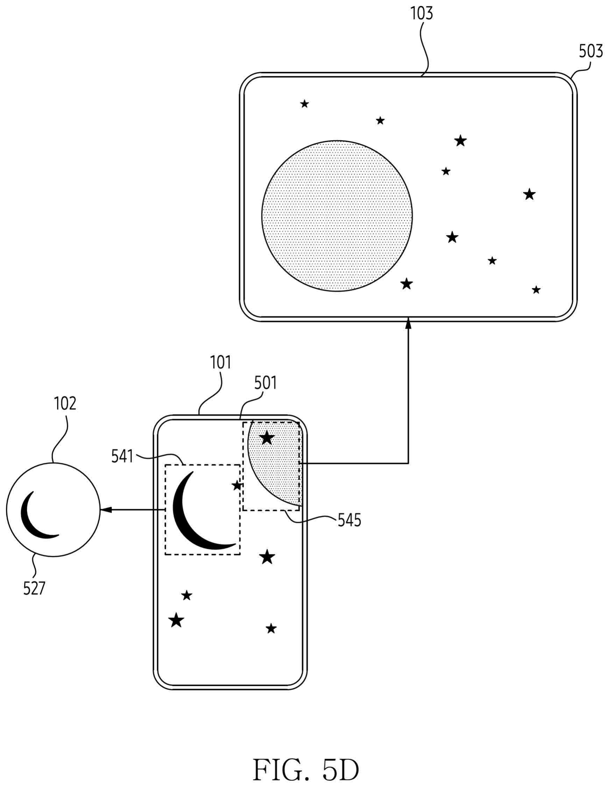

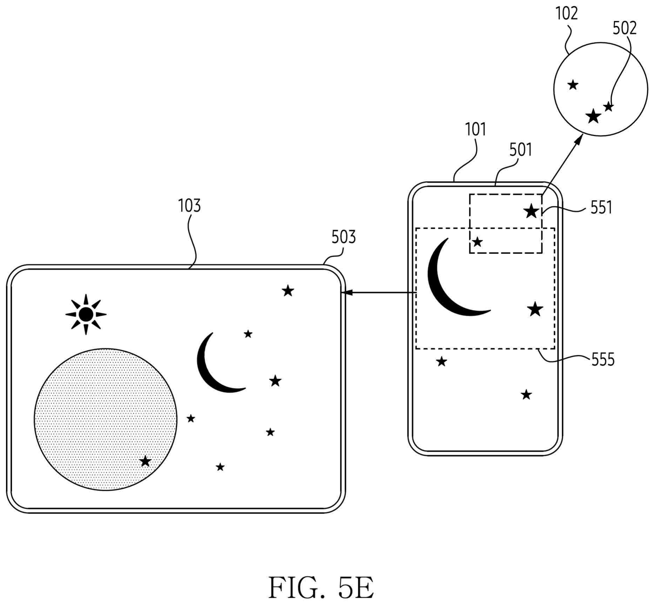

FIG. 5C illustrates an example of an image to be displayed on electronic devices according to a relative position with an electronic device. FIG. 5D illustrates an example of an image to be displayed on electronic devices according to a relative position with an electronic device. FIG. 5E illustrates an example of an image to be displayed on electronic devices according to a relative position with an electronic device.

FIGS. 5C, 5D and 5E may be described with reference to the components described through FIGS. 1, 2, 3, and 5A.

Referring to FIG. 5C, an electronic device 102 may be positioned on a lower left side of an electronic device 101, and an electronic device 103 may be positioned on a right side of the electronic device 101.

In an embodiment, a processor 120 may transmit another partial image 502 of an image 510 to the electronic device 102 based on a relative position of the electronic device 102. For example, the processor 120 may transmit the other partial image 502 including a region 531 corresponding to the relative position of the electronic device 102 to the electronic device 102.

In an embodiment, the processor 120 may transmit another partial image 503 of the image 510 to the electronic device 103 based on a relative position of the electronic device 103. For example, the processor 120 may transmit the other partial image 503 including a region 535 corresponding to the relative position of the electronic device 103 to the electronic device 103.

Referring to FIG. 5D, the electronic device 102 may be positioned on a left side of the electronic device 101, and the electronic device 103 may be positioned on an upper right side of the electronic device 101.

In an embodiment, the processor 120 may transmit the other partial image 502 of the image 510 to the electronic device 102 based on the relative position of the electronic device 102. For example, the processor 120 may transmit the other partial image 502 including a region 541 corresponding to the relative position of the electronic device 102 to the electronic device 102.

In an embodiment, the processor 120 may transmit the other partial image 503 of the image 510 to the electronic device 103 based on the relative position of the electronic device 103. The processor 120 may transmit the other partial image 503 including an object 545 corresponding to the relative position of the electronic device 103 to the electronic device 103.

Referring to FIG. 5E, the electronic device 102 may be positioned on the upper right side of the electronic device 101, and the electronic device 103 may be positioned on the lower left side of the electronic device 101.

In an embodiment, the processor 120 may transmit the other partial image 502 of the image 510 to the electronic device 102 based on the relative position of the electronic device 102. For example, the processor 120 may transmit the other partial image 502 including an object 551 corresponding to the relative position of the electronic device 102 to the electronic device 102.

In an embodiment, the processor 120 may transmit the other partial image 503 of the image 510 to the electronic device 103 based on the relative position of the electronic device 103. For example, the processor 120 may transmit the other partial image 503 including an object 555 corresponding to the relative position of the electronic device 103 to the electronic device 103.

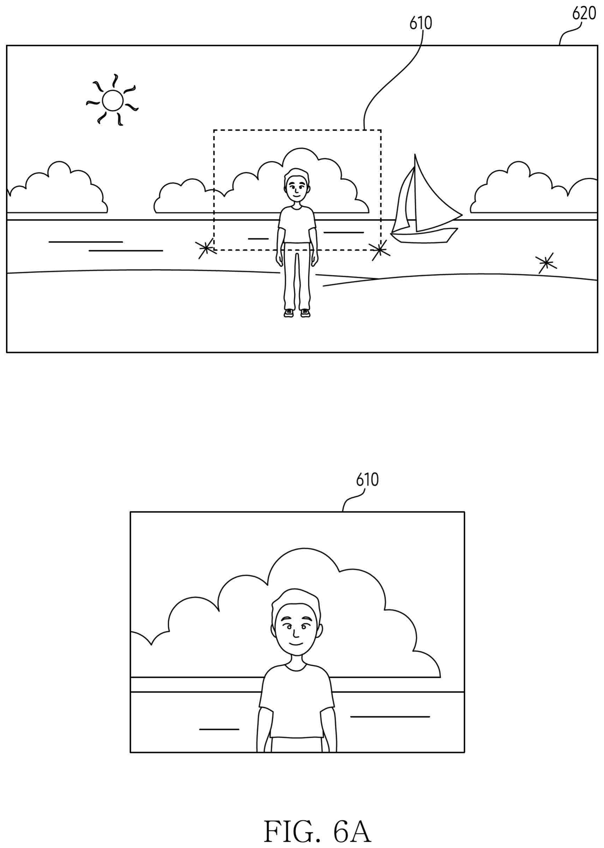

FIG. 6A illustrates an example of an image obtained from a content.

FIG. 6A may be described with reference to the components described through FIGS. 1, 2, and 3.

In an embodiment, a processor 120 may identify a content 610. For example, the content 610 may be a content indicated by a user input. For example, the content 610 may be a content selected by the user input among one or more images being displayed through a gallery application.

In an embodiment, the processor 120 may obtain at least one prompt related to the content 610. For example, the processor 120 may obtain the at least one prompt related to the content 610 through a captioning model 241. For example, the processor 120 may obtain the at least one prompt related to the content 610 by inputting the content 610 to the captioning model 241.

For example, the processor 120 may extract at least one word for at least one object included in the content 610 based on the captioning model 241. For example, the at least one word indicating the at least one object may include at least one of a child, a sea, or a beach.

For example, the processor 120 may extract at least one keyword for the content 610 based on the captioning model 241. For example, the at least one keyword may include a word (e.g., portrait, landscape, or nature) that describes a state or a property of the at least one object. For example, a keyword may include a word (e.g., swimming or sea bathing) that describes a movement or an action of the at least one object.

In an embodiment, the processor 120 may obtain an image 620 using a generative AI model 249. For example, the processor 120 may obtain the image 620 based on the content 610. For example, the processor 120 may obtain the image 620 based on the at least one prompt of the content 610. For example, the processor 120 may obtain the image 620 based on the content 610 and the at least one prompt.

For example, the processor 120 may generate the image 620 including the content 610. For example, the processor 120 may generate the image 620 by out-drawing the content 610 based on the content 610 and the at least one prompt.

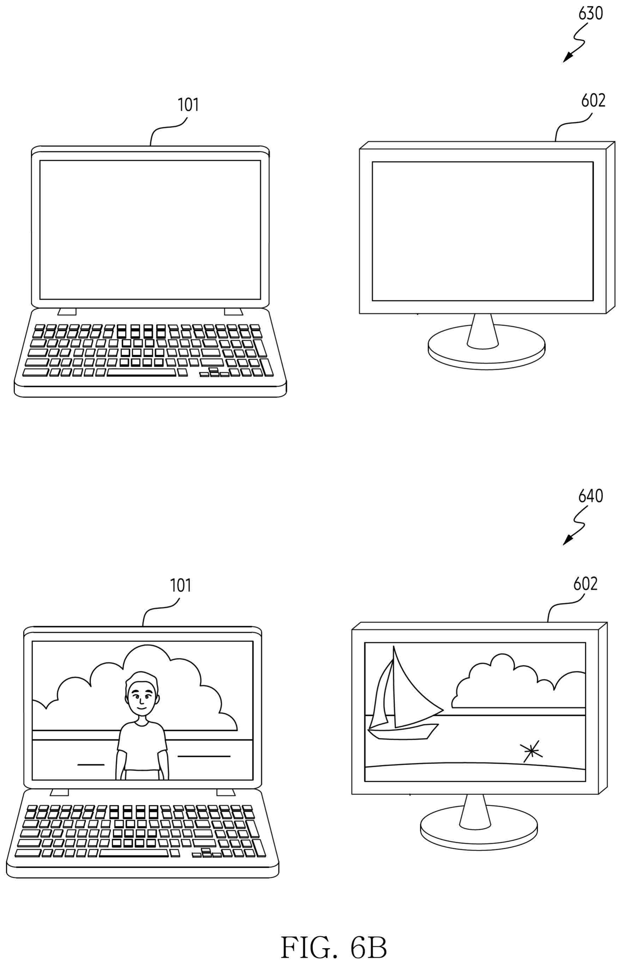

FIG. 6B illustrates an example of an image to be displayed on an external electronic device according to a relative position with an electronic device.

FIG. 6B may be described with reference to the components described through FIGS. 1, 2, and 3.

In an embodiment, a processor 120 may identify an electronic device 602 peripheral to an electronic device 101. For example, the processor 120 may identify the peripheral electronic device 602 based on a short-range wireless communication protocol using a communication circuit 290.

In an embodiment, the processor 120 may identify relationship information between the electronic device 101 and the electronic device 602. For example, the processor 120 may identify the relationship information between the electronic device 101 and the electronic device 602 based on an information extraction model 245. For example, the relationship information may include position information between the electronic device 101 and the electronic device 602. For example, referring to a situation 630, the electronic device 101 may identify position information indicating that the electronic device 602 is positioned on a right side of the electronic device 101.

In an embodiment, the processor 120 may identify a partial image to be displayed on a display 260 in an image 620. For example, the processor 120 may identify the partial image to be displayed on the display 260 in the image 620 based on the content 610. For example, the processor 120 may identify a region including the content 610 in the image 620 as the partial image to be displayed on the display 260.

In an embodiment, the processor 120 may identify another partial image to be displayed on the electronic device 602 in the image 620. For example, the processor 120 may identify the other partial image to be displayed on a display of the electronic device 602 in the image 620.

In an embodiment, the processor 120 may identify, in the image 620, the partial image to be displayed on the electronic device 101 and the other partial image to be displayed on the electronic device 602. For example, the processor 120 may identify the other partial image to be displayed on the electronic device 602, based on the relationship information. For example, the processor 120 may identify the other partial image to be displayed on the electronic device 602 based on the position information between the electronic device 101 and the electronic device 602. For example, in a case that the electronic device 602 is positioned on the right side of the electronic device 101, the processor 120 may identify the other partial image to be displayed on the electronic device 602 in a right side region of the partial image displayed on the electronic device 101 in the image 620.

In an embodiment, the processor 120 may transmit the other partial image to be displayed on the electronic device 602 to the electronic device 602. For example, the processor 120 may transmit the other partial image to the electronic device 602 such that the electronic device 602 displays the other partial image. For example, referring to a situation 640, the content 610 may be displayed on the electronic device 101, and a partial image of a right side of a region in which the content 610 is positioned in the image 620 may be displayed on the electronic device 602.

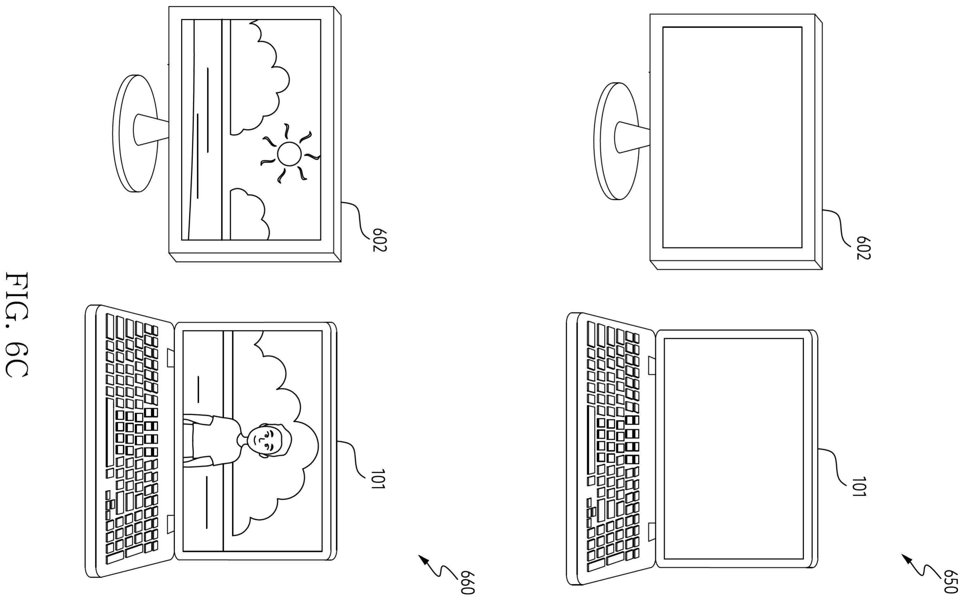

FIG. 6C illustrates an example of an image to be displayed on an external electronic device according to a relative position with an electronic device.

FIG. 6C may be described with reference to the components described through FIGS. 1, 2, and 3.

FIG. 6C describes a situation in which a relative position between the electronic device 101 and the electronic device 602 is changed, after images are respectively displayed on the electronic device 101 and the electronic device 602 as in FIG. 6B.

In an embodiment, the processor 120 may identify the electronic device 602 peripheral to the electronic device 101. For example, the processor 120 may identify the peripheral electronic device 602 based on a short-range wireless communication protocol using the communication circuit 290.

In an embodiment, the processor 120 may identify relationship information between the electronic device 101 and the electronic device 602. The processor 120 may identify the relationship information between the electronic device 101 and the electronic device 602 based on an information extraction model 245. For example, the relationship information may include positional relationship information between the electronic device 101 and the electronic device 602. For example, referring to a situation 650, the electronic device 101 may identify position information indicating that the electronic device 602 is positioned on a left side of the electronic device 101.

In an embodiment, the processor 120 may identify that the relative position between the electronic device 101 and the electronic device 602 is changed. For example, after transmitting the other partial image to be displayed on the electronic device 602, the processor 120 may identify that the relative position between the electronic device 101 and the electronic device 602 is changed.

In an embodiment, the processor 120 may identify still another partial image to be displayed on the electronic device 602 in the image 620. For example, the processor 120 may identify the still other partial image to be displayed on a display of the electronic device 602 in the image 620.

In an embodiment, the processor 120 may identify, in the image 620, the partial image to be displayed on the electronic device 101 and the still other partial image to be displayed on the electronic device 602. For example, the processor 120 may identify the still other partial image to be displayed on the electronic device 602, based on the relationship information. For example, the processor 120 may identify the still other partial image to be displayed on the electronic device 602 based on the position information. For example, in a case that the electronic device 602 is positioned on the left side of the electronic device 101, the processor 120 may identify the still other partial image to be displayed on the electronic device 602 in a left side region of the partial image displayed on the electronic device 101.

In an embodiment, the processor 120 may transmit the still other partial image to be displayed on the electronic device 602 to the electronic device 602. For example, the processor 120 may transmit the still other partial image to the electronic device 602 such that the electronic device 602 displays the still other partial image. For example, referring to a situation 660, the content 610 may be displayed on the electronic device 101, and the left side region of the region in which the content 610 is positioned in the image 620 may be displayed on the electronic device 602.

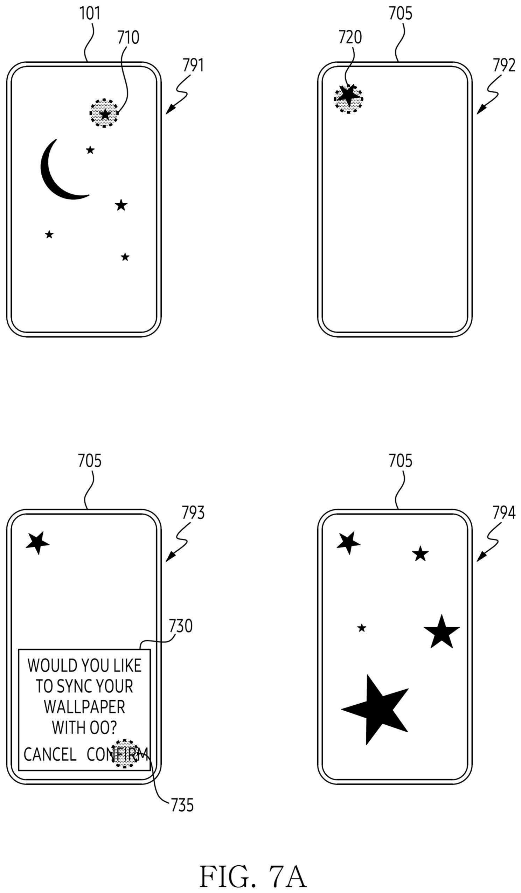

FIG. 7A illustrates an example of an operation in which an electronic device shares data with another electronic device.

FIG. 7A may be described with reference to the components described through FIGS. 1, 2, and 3.

Referring to an image 791, a processor 120 may identify a user input 710. For example, the user input 710 may include an input for selecting an object included in an image displayed on a display 260. The user input 710 may include an input for moving the selected object. The user input 710 may include an input for moving the selected object out of a screen of the display 260. The user input 710 may include an input for moving the selected object in a direction of an electronic device 705.

In an embodiment, the processor 120 may transmit data related to the selected object to the electronic device 705 based on identifying the user input 710. For example, the processor 120 may transmit the data related to the selected object, which causes the electronic device 705 to display the selected object based on identifying the user input 710. For example, the processor 120 may transmit data including a request for the electronic device 705 to display an image related to the selected object based on identifying the user input 710.

In an embodiment, referring to an image 792, the electronic device 705 may display an object based on data obtained from an electronic device 101. The electronic device 705 may identify a user input 720. For example, the user input 720 may include an input for selecting an object displayed on the electronic device 705.

Referring to an image 793, the electronic device 705 may display a screen 730 that queries whether to accept a request from the electronic device 101 in response to the user input 720 for selecting the object displayed on the electronic device 705.

The electronic device 705 may identify a user input 735. The electronic device 705 may identify the user input 735 on the screen 730. For example, the user input 735 may include an input for selecting one of the selectable objects on the screen 730 displayed on the electronic device 705.

The electronic device 705 may transmit a response indicating rejection of the request to the electronic device 101 in response to a user input of selecting an object (e.g., cancel) indicating rejection on the screen 730.

The electronic device 705 may transmit a response indicating approval for the request to the electronic device 101 in response to the user input 735 for selecting an object (e.g., confirm) indicating approval on the screen 730.

In response to receiving the response indicating the approval for the request from the electronic device 705, the electronic device 101 may transmit the image related to the object selected by the user input 710 to the electronic device 705. The electronic device 101 may transmit an image having a size according to resolution of the electronic device 705 to the electronic device 705. For example, the electronic device 101 may identify the image of the size according to the resolution of the electronic device 705 based on information indicating the resolution of the electronic device 705 included in the approval for the request from the electronic device 705, and transmit the identified image to the electronic device 705. However, it is not limited thereto.

Referring to an image 794, the electronic device 705 may display an image received from the electronic device 101. For example, the electronic device 705 may display the received image as at least one of a home screen, a lock screen, or a wallpaper.

In FIG. 7A, the electronic device 101 has been exemplified as transmitting the image related to the object selected by the user input 710 in response to receiving the response indicating the approval of the request from the electronic device 705, but this is merely an example. According to an embodiment, the electronic device 101 may transmit at least one prompt for generating the image 794 to the electronic device 705, and the electronic device 705 may generate the image 794 based on the received at least one prompt.

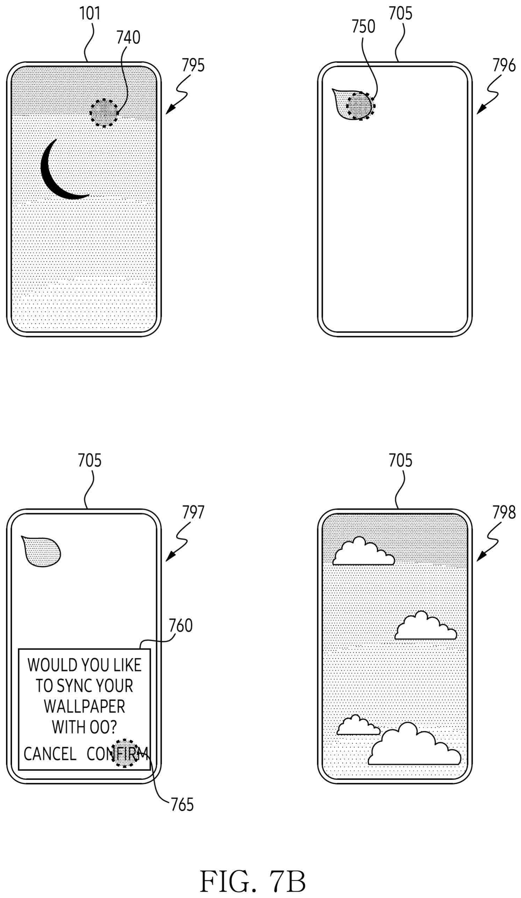

FIG. 7B illustrates an example of an operation in which an electronic device shares data with another electronic device.

FIG. 7B may be described with reference to the components described through FIGS. 1, 2, and 3.

Referring to an image 795, a processor 120 may identify a user input 740. For example, the user input 740 may include an input for selecting an object included in an image displayed on a display 260. The user input 740 may include an input for moving the selected object. The user input 740 may include an input for moving the selected object out of a screen of the display 260. The user input 740 may include an input for moving the selected object in a direction of an electronic device 705.

In an embodiment, the processor 120 may transmit data related to the selected object to the electronic device 705 based on identifying the user input 740. For example, the processor 120 may transmit the data related to the selected object, which causes the electronic device 705 to display the selected object based on identifying the user input 740. For example, the processor 120 may transmit data including a request for the electronic device 705 to display an image related to the selected object based on identifying the user input 740.

Referring to an image 796, the electronic device 705 may display an object based on data obtained from an electronic device 101. The electronic device 705 may identify a user input 750. For example, the user input 750 may include an input for selecting an object displayed on the electronic device 705.

Referring to an image 797, the electronic device 705 may display a screen 760 that queries whether to accept a request from the electronic device 101 in response to the user input 750 for selecting the object displayed on the electronic device 705.

The electronic device 705 may identify a user input 765. The electronic device 705 may identify the user input 765 on the screen 760. For example, the user input 765 may include an input for selecting one of the selectable objects on the screen 760 displayed on the electronic device 705.

The electronic device 705 may transmit a response indicating rejection of the request to the electronic device 101 in response to a user input of selecting an object (e.g., cancel) indicating rejection on the screen 760.

The electronic device 705 may transmit a response indicating approval for the request to the electronic device 101 in response to the user input 765 for selecting an object (e.g., confirm) indicating approval on the screen 760.

In response to receiving the response indicating the approval for the request from the electronic device 705, the electronic device 101 may transmit the image related to the object selected by the user input 740 to the electronic device 705. The electronic device 101 may transmit an image having a size according to resolution of the electronic device 705 to the electronic device 705. For example, the electronic device 101 may identify the image of the size according to the resolution of the electronic device 705 based on information indicating the resolution of the electronic device 705 included in the approval for the request from the electronic device 705, and transmit the identified image to the electronic device 705. However, it is not limited thereto.

Referring to an image 798, the electronic device 705 may display an image received from the electronic device 101. For example, the electronic device 705 may display the received image as at least one of a home screen, a lock screen, or a wallpaper.

In FIG. 7B, the electronic device 101 has been exemplified as transmitting the image related to the object selected by the user input 710 in response to receiving the response indicating the approval for the request from the electronic device 705, but this is merely an example. According to an embodiment, the electronic device 101 may transmit at least one prompt for generating the image 798 to the electronic device 705, and the electronic device 705 may generate the image 798 based on the received at least one prompt.

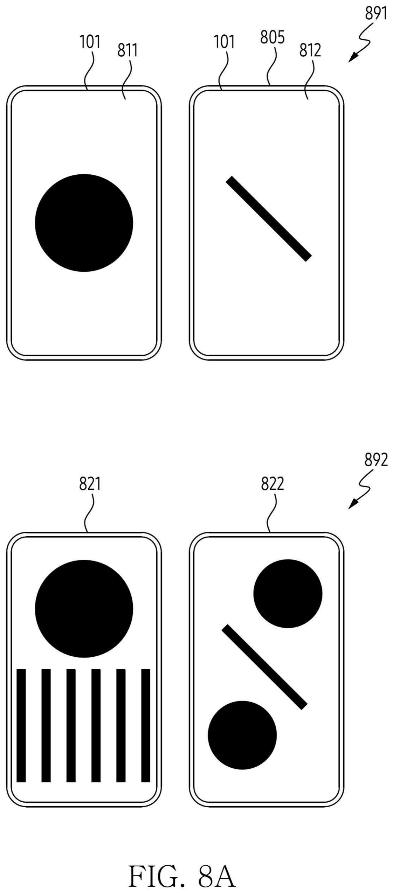

FIG. 8A illustrates an example of an image generated based on contents selected from a plurality of electronic devices.

FIG. 8A may be described with reference to the components described through FIGS. 1, 2, and 3.

An electronic device 101 may be connected to an electronic device 805. For example, the electronic device 101 may be connected to the electronic device 805 based on a wired communication connection and/or a wireless communication connection through a communication circuit 290.

Referring to an image 891, the electronic device 101 may select a content 811. The electronic device 805 may select a content 812.

According to an embodiment, the electronic device 101 may obtain the selected content 812 from the electronic device 805. For example, the electronic device 101 may obtain at least one prompt for the selected content 812 from the electronic device 805.

In an embodiment, a processor 120 may extract at least one prompt from each of the two or more contents 811 and 812. For example, the processor 120 may obtain a word (e.g., a circle) indicating an object from the content 811. For example, the processor 120 may obtain a keyword (e.g., black) related to the object from the content 811. For example, the processor 120 may obtain a word (e.g., a line) indicating an object from the content 812. For example, the processor 120 may obtain a keyword (e.g., oblique or black) related to the object from the content 811.

In an embodiment, referring to an image 892, the processor 120 may generate at least one image 821 and 822 based on the two or more contents 811 and 812. For example, the processor 120 may generate the at least one image 821 and 822 based on the at least one prompt extracted from the two or more contents 811 and 812.

In an embodiment, the processor 120 may generate the at least one image 821 and 822 using a prompt based on a word (e.g., circle or line) indicating an object, a keyword (e.g., black or oblique) related to the object, or a combination thereof. For example, the processor 120 may generate the at least one image 821 and 822 by inputting the prompt based on the word (e.g., circle or line) indicating the object, the keyword (e.g., black or oblique) related to the object, or the combination thereof to a generative AI model 245. For example, the processor 120 may generate the image 821 based on the word (e.g., circle or line) indicating the object and a portion (e.g., black) of the keyword related to the object. For example, the processor 120 may generate the image 822 based on the word (e.g., circle or line) indicating the object and another portion (e.g., diagonal) of the keyword related to the object. However, it is not limited thereto. For example, the generative AI model 249 may generate a plurality of images from one prompt. For example, the processor 120 may generate the plurality of images 821 and 822 by inputting the prompt based on the word (e.g., circle or line) indicating the object and the keyword (e.g., black or oblique) related to the object to the generative AI model 245.

For example, the processor 120 may display an image (e.g., the image 821) selected from the at least one image 821 and 822 through a display 260. For example, the processor 120 may transmit an image (e.g., the image 821) selected from the at least one image 821 and 822 to the electronic device 805. However, it is not limited thereto. The processor 120 may display an image (e.g., the image 821) selected from the at least one image 821 and 822, through the display 260, and may transmit an image (e.g., the image 822) not selected from the at least one image 821 and 822 to the electronic device 805.

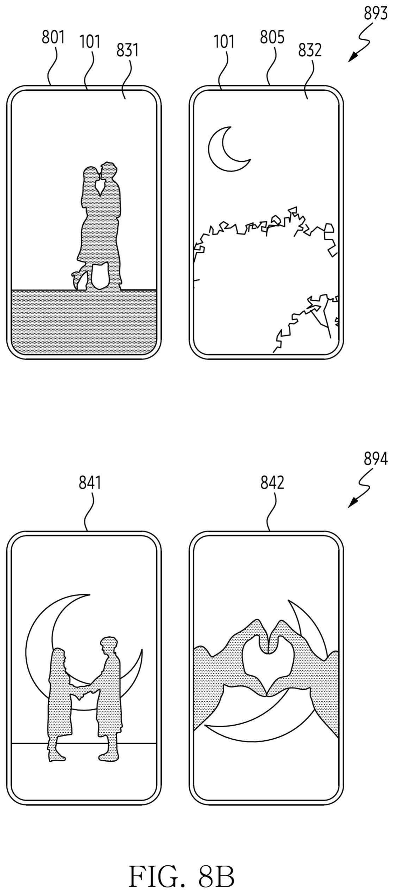

FIG. 8B illustrates an example of an image generated based on contents selected from a plurality of electronic devices.

FIG. 8B may be described with reference to the components described through FIGS. 1, 2, and 3.

An electronic device 101 may be connected to an electronic device 805. For example, the electronic device 101 may be connected to the electronic device 805 based on a wired communication connection and/or a wireless communication connection through a communication circuit 290.

Referring to an image 893, the electronic device 101 may select a content 831. The electronic device 805 may select a content 832.

In an embodiment, the electronic device 101 may obtain at least one prompt of the selected content 832 from the electronic device 805. For example, the electronic device 101 may obtain the at least one prompt for the selected content 832 from the electronic device 805.

In an embodiment, the processor 120 may extract at least one prompt from each of the two or more contents 831 and 832. For example, the processor 120 may obtain a word (e.g., a lover or person) indicating an object from the content 831. For example, the processor 120 may obtain a keyword (e.g., love, face, hug, black, or sunset) related to the object from the content 831. For example, the processor 120 may obtain a word (e.g., moon, night, or sky) indicating an object from the content 832. For example, the processor 120 may obtain a keyword (e.g., full moon) related to the object from the content 831.

Referring to an image 894, in an embodiment, the processor 120 may generate at least one image 841 and 842 based on the two or more contents 831 and 832. For example, the processor 120 may generate the at least one image 841 and 842 based on the at least one prompt extracted from the two or more contents 831 and 832.

For example, the processor 120 may generate the at least one image 841 and 842 using a prompt based on a word (e.g., lover or moon) indicating an object, a keyword (e.g., full moon or face) related to the object, or a combination thereof. For example, the processor 120 may generate the at least one image 841 and 842 by inputting the prompt based on the word (e.g., lover or moon) indicating the object, the keyword (e.g., love or full moon) related to the object, or a combination thereof to a generative AI model 249. For example, the processor 120 may generate the image 841 based on the word (e.g., lover or moon) indicating the object and a portion (e.g., full moon) of the keyword related to the object. For example, the processor 120 may generate the image 842 based on the word (e.g., lover, or moon) indicating the object and another portion (e.g., love) of the keyword related to the object. However, it is not limited thereto. For example, the generative AI model 249 may generate a plurality of images from one prompt. For example, the processor 120 may generate the plurality of images 841 and 842 by inputting the prompt based on the word (e.g., lover or moon) indicating the object and the keyword (e.g., full moon or love) related to the object to the generative AI model 245.

In an embodiment, the processor 120 may display an image (e.g., the image 841) selected from the at least one image 841 and 842 through a display 260. The processor 120 may transmit an image (e.g., the image 841) selected from the at least one image 841 and 842 to the electronic device 805. However, it is not limited thereto. The processor 120 may display an image (e.g., the image 841) selected from the at least one image 841 and 842 through the display 260, and may transmit an image (e.g., the image 842) not selected from the at least one image 841 and 842 to the electronic device 805.

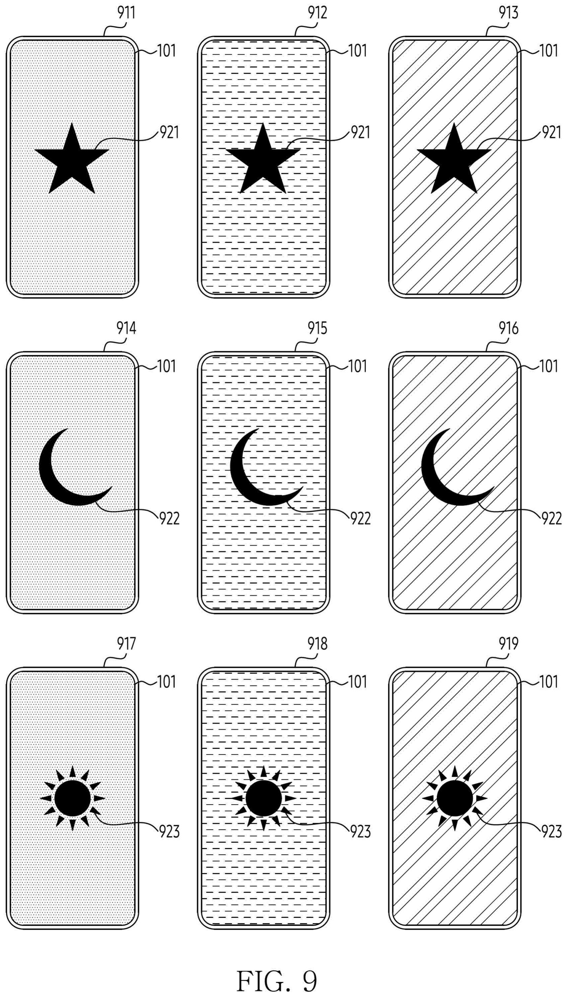

FIG. 9 illustrates an example of an operation of selecting one of a plurality of images in an electronic device.

An electronic device 101 may include a plurality of images 911, 912, 913, 914, 915, 916, 917, 918, and 919.

Referring to FIG. 9, the electronic device 101 may preview one image 915 of the plurality of images 911, 912, 913, 914, 915, 916, 917, 918, and 919.

In an embodiment, the electronic device 101 may change an image to be previewed based on an input. For example, the electronic device 101 may change an image to be previewed based on a user input to the image 915. For example, the electronic device 101 may change an image to be previewed based on a swipe input to the image 915. For example, the electronic device 101 may preview an image in which an object has been changed based on a swipe input in a vertical direction with respect to the image 915. For example, based on an upward swipe input to the image 915, the processor 120 may preview the image 912 in which an object has been changed from a moon 922 to a star 921. For example, based on a downward swipe input to the image 915, the processor 120 may preview the image 918 in which an object has been changed from the moon 922 to a sun 923. For example, the electronic device 101 may preview an image in which a tone (e.g., or a color tone) has been changed based on a swipe input in a horizontal direction with respect to the image 915. For example, based on a swipe input in a right direction to the image 915, the processor 120 may preview the image 916 in which a color has been darkened. For example, based on a swipe input in a left direction to the image 915, the processor 120 may preview the image 914 in which a color has been brightened. However, it is not limited thereto.

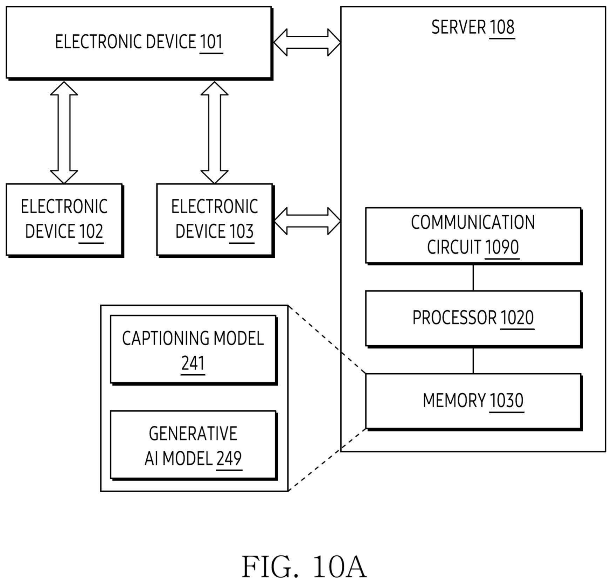

FIG. 10A is a simplified block diagram of an electronic device according to an embodiment.

FIG. 10A may be described with reference to the components described through FIGS. 1, 2, and 3.

Electronic devices 101, 102, and 103 of FIG. 10A may correspond to the electronic devices 101, 102, and 103 described with reference to FIGS. 1 and 2, respectively.

Referring to FIG. 10A, a server 108 may include a processor 1020, memory 1030, and a communication circuit 1090. For example, the memory 130 may include a captioning model 241 and a generative AI model 245. The processor 1020 of FIG. 10A may correspond to the processor 120 described with reference to FIG. 1. The memory 1030 of FIG. 10A may correspond to the memory 130 described with reference to FIG. 1. The communication circuit 1090 of FIG. 10A may correspond to the communication module 190 described with reference to FIG. 1. The captioning model 241 of FIG. 10A may correspond to the captioning model 241 described with reference to FIG. 2. The generative AI model 249 of FIG. 10A may correspond to the generative AI model 249 described with reference to FIG. 2.

In an embodiment, the processor 1020 may obtain a content 210. For example, the processor 1020 may obtain the content 210 identified by a user input of a user of the electronic device 101 from the electronic device 101. For example, the processor 1020 may obtain at least one prompt based on the content 210 identified by a first user input of the user of the electronic device 101. For example, the processor 1020 may obtain the at least one prompt from the content 210 through the captioning model 241.

In an embodiment, the processor 1020 may obtain relationship information indicating a relationship between the electronic device 101 and the at least one external electronic device 102 and 103 identified by a user input of the user.

In an embodiment, the processor 1020 may identify device information of the electronic device 101. In an embodiment, the processor 1020 may identify device information of the at least one external electronic device 102 and 103 identified by the user input of the user. For example, the device information may include information related to a display 160 (e.g., resolution) of the electronic device 101. The device information may include information related to displays 261 and 265 (e.g., resolution) of the at least one electronic device 102 and 103.

In an embodiment, the processor 1020 may generate at least one image 211, 215, and 219 by the generative AI model 249 based on the at least one prompt and the relationship information. For example, the processor 1020 may generate the at least one image 211, 215, and 219 including the content 210. For example, the processor 1020 may out-draw the content 210 based on related information of the content 210. For example, the processor 1020 may generate the at least one image 211, 215, and 219 based on out-draw that draws a region other than the content 210. For example, a region other than the content 210 in the at least one image 211, 215, and 219 may be generated by the generative AI model 249.

In an embodiment, the processor 1020 may transmit the at least one image 211, 215, and 219 to the electronic device 101 through the communication circuit 1090. After transmitting the at least one image 211, 215, and 219, the processor 1020 may receive a user input for selecting the first image 211 from the electronic device 101 through the communication circuit 1090. In an embodiment, after transmitting the preview image 440, the processor 1020 may receive a request for the partial image 401 from the electronic device 101 through the communication circuit 1090.

In an embodiment, the processor 1020 may select the first image 211 from the at least one image 211, 215, and 219. The processor 1020 may select the first image 211 from the at least one image 211, 215, and 219 based on the user input for selecting the first image 211.

In an embodiment, the processor 1020 may transmit a partial image of the first image 211 to the electronic device 101 through the communication circuit 1090 such that the electronic device 101 displays the partial image on the electronic device 101. After receiving the request, the processor 1020 may transmit the partial image of the first image 211 to the electronic device 101 through the communication circuit 1090. For example, the partial image may be selected based on a region in which the content 210 is included.

In an embodiment, the processor 1020 may transmit a partial image of the first image 211 identified based on the device information of the electronic device 101 to the electronic device 101. For example, the processor 1020 may transmit a partial image of the first image 211 selected from the at least one image 211, 215, and 219 to the electronic device 101 based on the information related to the display 160 (e.g., the resolution) of the electronic device 101. For example, the processor 1020 may transmit a partial image corresponding to the resolution of the display 160 in the selected first image 211 to the electronic device 101. For example, the processor 1020 may transmit a partial image including at least a portion of the content 210 in the selected first image 211 to the electronic device 101, based on the information related to the display 160 (e.g., resolution).

In an embodiment, the processor 1020 may transmit at least one other partial image of the first image 211 to the at least one external electronic device 102 and 103 through the communication circuit 1090, such that the at least one external electronic device 102 and 103 displays the at least one other partial image on the at least one external electronic device 102 and 103. After receiving the request, the processor 1020 may transmit the at least one other partial image of the first image 211 to the at least one external electronic device 102 and 103 through the communication circuit 1090. For example, another partial image may be selected based on relationship information. For example, the processor 1020 may identify another partial image to be displayed on the at least one external electronic device 102 and 103 based on a relative position between the electronic device 101 and the at least one external electronic device 102 and 103. For example, the relative position may be identified based on the position information. The position information may be included in the relationship information between the electronic device 101 and the at least one external electronic device 102 and 103. However, it is not limited thereto.

In an embodiment, the processor 1020 may transmit at least one other partial image to the at least one external electronic device 102 and 103 based on the position information and/or the information related to the displays 261 and 265 (e.g., resolution) of the at least one electronic device 102 and 103. For example, the processor 1020 may transmit at least one other partial image corresponding to the resolution of the displays 261 and 265 based on a relative position of the at least one electronic device 102 and 103 in the first image 211 to the at least one external electronic device 102 and 103. For example, in a case that the at least one electronic device 102 and 103 is positioned on a left side of the electronic device 101, the processor 1020 may transmit, to the at least one external electronic device 102 and 103, the at least one other partial image corresponding to the resolution of the displays 261 and 265 in a left side portion of a partial image of the first image 211. For example, in a case that the at least one electronic device 102 and 103 is positioned on a right side of the electronic device 101, the processor 1020 may transmit, to the at least one external electronic device 102 and 103, the at least one other partial image corresponding to the resolution of the displays 261 and 265 in a right side portion of a partial image of the first image 211.

According to an embodiment, after receiving the request, the processor 1020 may transmit a partial image of the first image 211 and at least one other partial image to the electronic device 101 through the communication circuit 1090. The electronic device 101 may transmit at least one other partial image to the at least one external electronic device 102 and 103.

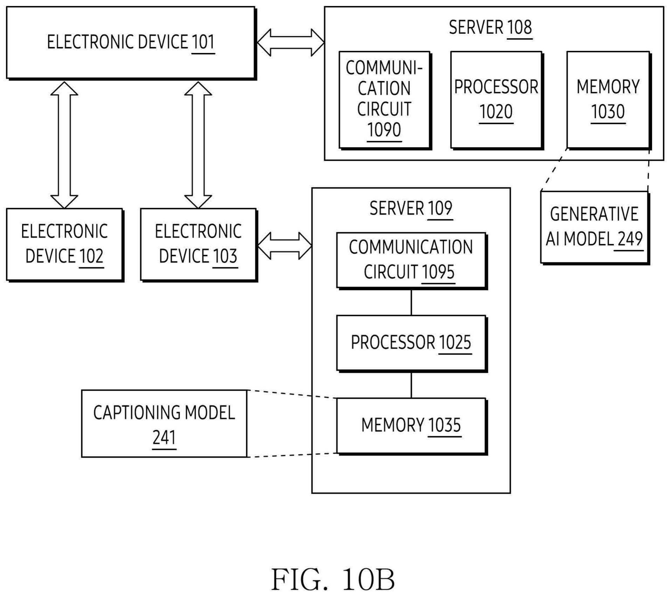

FIG. 10B is a simplified block diagram of an electronic device according to an embodiment.

FIG. 10B may be described with reference to the components described through FIGS. 1, 2, and 3.

Electronic devices 101, 102, and 103 of FIG. 10B may correspond to the electronic devices 101, 102, and 103 described with reference to FIGS. 1 and 2, respectively. A server 108 of FIG. 10B may correspond to the server 108 described with reference to FIGS. 1 and 10A.

Referring to FIG. 10B, a server 109 may include a processor 1025, memory 1035, and a communication circuit 1095. For example, the memory 1035 may include a captioning model 241. The processor 1025 of FIG. 10B may correspond to the processor 120 described with reference to FIG. 1. The memory 1035 of FIG. 10B may correspond to the memory 130 described with reference to FIG. 1. The communication circuit 1095 of FIG. 10B may correspond to the communication module 190 described with reference to FIG. 1. The captioning model 241 of FIG. 10B may correspond to the captioning model 241 described with reference to FIG. 2.

In an embodiment, the server 108 may obtain at least one prompt based on a content 210 identified by a first user input of a user of the electronic device 101.

For example, the server 108 may obtain the content 210 identified by a user input of the user of the electronic device 101 from the electronic device 101. The server 108 may transmit the obtained content 210 to the server 109. Thereafter, the server 108 may obtain the at least one prompt for the content 210 from the server 109. However, it is not limited thereto.

For example, the electronic device 101 may transmit the content 210 identified by the user input of the user to the server 109. The server 109 may obtain the at least one prompt for the content 210 based on the captioning model 241. Thereafter, the server 109 may transmit the at least one prompt for the content 210 to the server 108.

In an embodiment, the server 108 may obtain relationship information indicating a relationship between the electronic device 101 and the at least one external electronic device 102 and 103 identified by a user input of the user.

In an embodiment, a processor 1020 may identify device information of the electronic device 101. In an embodiment, the processor 1020 may identify device information of the at least one external electronic device 102 and 103 identified by the user input of the user. For example, the device information may include information related to a display 160 (e.g., resolution) of the electronic device 101. The device information may include information related to displays 261 and 265 (e.g., resolution) of the at least one electronic device 102 and 103.

In an embodiment, the server 108 may generate at least one image 211, 215, and 219 by a generative AI model 249 based on the at least one prompt and the relationship information.

For example, the server 108 may transmit the at least one image 211, 215, and 219 to the electronic device 101. After transmitting the at least one image 211, 215, and 219, the server 108 may receive a user input for selecting the first image 211 from the electronic device 101. For example, after transmitting the preview image 440, the server 108 may receive a request for the partial image 401 from the electronic device 101.

For example, the server 108 may select the first image 211 from the at least one image 211, 215, and 219 based on the user input for selecting the first image 211.

For example, the server 108 may transmit a partial image of the first image 211 to the electronic device 101 such that the electronic device 101 displays the partial image on the electronic device 101. For example, the server 108 may transmit at least one other partial image of the first image 211 to the at least one external electronic device 102 and 103, such that the at least one external electronic device 102 and 103 displays the at least one other partial image on the at least one external electronic device 102 and 103. For example, the processor 1020 may transmit a partial image corresponding to the resolution of the display 160 in the selected first image 211 to the electronic device 101. For example, the processor 1020 may transmit at least one other partial image corresponding to the resolution of the displays 261 and 265 based on a relative position of the at least one electronic device 102 and 103 in the first image 211 to the at least one external electronic device 102 and 103.

According to an embodiment, after receiving the request, the processor 1020 may transmit a partial image of the first image 211 and at least one other partial image to the electronic device 101. The electronic device 101 may transmit at least one other partial image to the at least one external electronic device 102 and 103.

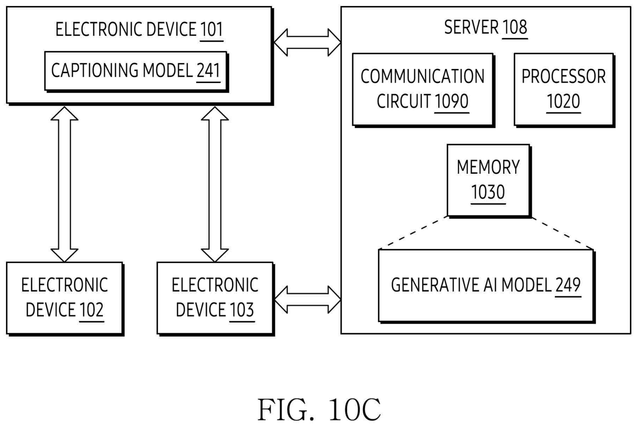

FIG. 10C is a simplified block diagram of an electronic device according to an embodiment.

FIG. 10C may be described with reference to the components described through FIGS. 1, 2, and 3.

Electronic devices 101, 102, and 103 of FIG. 10C may correspond to the electronic devices 101, 102, and 103 described with reference to FIGS. 1 and 2, respectively. A server 108 of FIG. 10C may correspond to the server 108 described with reference to FIGS. 1 and 10A.

In an embodiment, the server 108 may obtain at least one prompt based on a content 210 identified by a first user input of a user of the electronic device 101.

For example, the electronic device 101 may identify the content 210 based on a user input of the user. For example, the electronic device 101 may obtain the at least one prompt for the content 210 based on a captioning model 241. Thereafter, the electronic device 101 may transmit the at least one prompt for the content 210 to the server 108.

In an embodiment, the server 108 may obtain relationship information indicating a relationship between the electronic device 101 and the at least one external electronic device 102 and 103 identified by a user input of the user.

In an embodiment, the server 108 may generate at least one image 211, 215, and 219 by a generative AI model 249 based on the at least one prompt and the relationship information.

For example, the server 108 may transmit the at least one image 211, 215, and 219 to the electronic device 101. After transmitting the at least one image 211, 215, and 219, the server 108 may receive a user input for selecting the first image 211 from the electronic device 101. For example, after transmitting the preview image 440, the server 108 may receive a request for the partial image 401 from the electronic device 101.

For example, the server 108 may select the first image 211 from the at least one image 211, 215, and 219 based on the user input for selecting the first image 211.

For example, the server 108 may transmit a partial image of the first image 211 to the electronic device 101 such that the electronic device 101 displays the partial image on the electronic device 101. For example, the server 108 may transmit at least one other partial image of the first image 211 to the at least one external electronic device 102 and 103, such that the at least one external electronic device 102 and 103 displays the at least one other partial image on the at least one external electronic device 102 and 103. For example, a processor 1020 may transmit a partial image corresponding to the resolution of a display 160 in the selected first image 211 to the electronic device 101. For example, the processor 1020 may transmit at least one other partial image corresponding to the resolution of displays 261 and 265 based on a relative position of the at least one electronic device 102 and 103 in the first image 211 to the at least one external electronic device 102 and 103.

According to an embodiment, after receiving the request, the processor 1020 may transmit a partial image of the first image 211 and at least one other partial image to the electronic device 101. The electronic device 101 may transmit at least one other partial image to the at least one external electronic device 102 and 103.

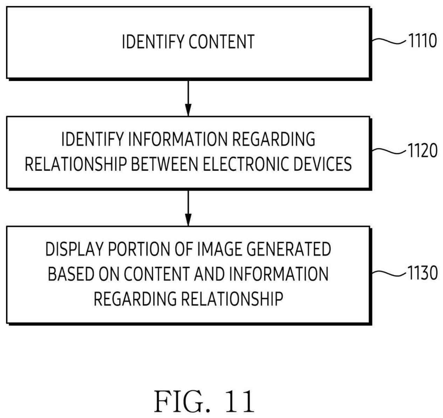

FIG. 11 is a flowchart exemplifying an operation performed by an electronic device according to an embodiment.

FIG. 11 may be described with reference to the components described through FIGS. 1, 2, and 3.

Referring to FIG. 11, in operation 1110, a processor 120 may identify a content 210. For example, the processor 120 may identify the content 210 based on a user input. However, it is not limited thereto. The processor 120 may obtain the content 210 from at least one external electronic device 102 and 103.

In operation 1120, the processor 120 may identify information regarding a relationship between electronic devices 101, 102, and 103. For example, the information indicating the relationship may include information indicating a positional relationship between the electronic device 101 and the at least one electronic device 102 and 103. For example, the information indicating the relationship may include information indicating a frequency of contact between a user of the electronic device 101 and a user of the at least one electronic device 102 and 103. For example, the information indicating the relationship may include information indicating a relationship between the user of the electronic device 101 and the user of the at least one electronic device 102 and 103. For example, the relationship between the user of the electronic device 101 and the user of the at least one electronic device 102 and 103 may be included in one category of one or more categories. For example, the one or more categories may include at least one of a lover, a couple, a family, a friend, a colleague, or an acquaintance.

In operation 1130, the processor 120 may display a portion of images 211, 215, and 219 generated based on the content 210 and the information regarding the relationship.

In an embodiment, the processor 120 may generate the at least one image 211, 215, and 219. For example, the processor 120 may generate the at least one image 211, 215, and 219 based on at least one prompt extracted from the content 210. For example, the processor 120 may generate the at least one image 211, 215, and 219 based on relationship information. For example, the processor 120 may generate the at least one image 211, 215, and 219 based on the at least one prompt and the relationship information. For example, the processor 120 may display a partial image of the first image 211 selected from the at least one image 211, 215, and 219 on a display 260.

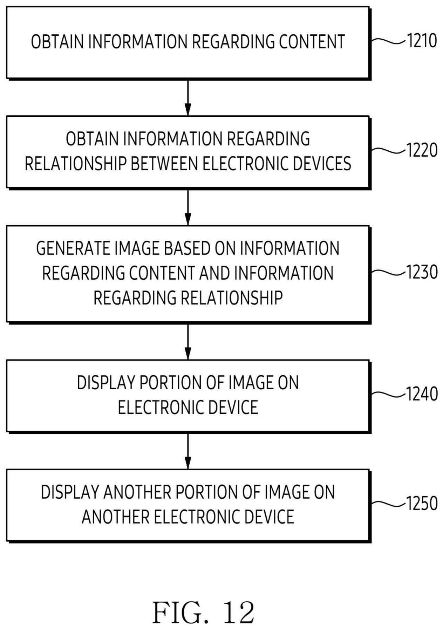

FIG. 12 is a flowchart exemplifying an operation performed by an electronic device according to an embodiment.

FIG. 12 may be described with reference to the components described through FIGS. 1, 2, and 3.

Referring to FIG. 12, in operation 1210, a processor 120 may obtain information related to a content. The processor 120 may extract (or obtain or identify) information from a content 210 based on a captioning model 241. The processor 120 may extract at least one prompt from the content 210 based on the captioning model 241. However, it is not limited thereto. The processor 120 may extract the at least one prompt from the content 210 based on the captioning model 241 of a server 109.

In operation 1220, the processor 120 may identify information regarding a relationship between electronic devices 101, 102, and 103. For example, the information indicating the relationship may include information indicating a positional relationship between the electronic device 101 and the at least one other electronic device 102 and 103. For example, the information indicating the relationship may include information indicating a frequency of contact between a user of the electronic device 101 and a user of the at least one other electronic device 102 and 103. For example, the information indicating the relationship may include information indicating a relationship between the user of the electronic device 101 and the user of the at least one other electronic device 102 and 103. For example, the relationship between the user of the electronic device 101 and the user of the at least one other electronic device 102 and 103 may be included in one category of one or more categories. For example, the one or more categories may include at least one of a lover, a couple, a family, a friend, a colleague, or an acquaintance.

In operation 1230, the processor 120 may generate an image based on information regarding a content and information regarding a relationship. The processor 120 may generate at least one image 211, 215, and 219 by inputting the content 210, the at least one prompt, and relationship information to a generative AI model 249. For example, in a case that the content 210 is an image, the processor 120 may generate the at least one image 211, 215, and 219 including the content 210. In a case that the content 210 is an image, the processor 120 may generate the at least one image 211, 215, and 219 extending from the content 210.

In operation 1240, the processor 120 may display a portion of the image on the electronic device 101. The processor 120 may display a partial image of the first image 211 selected from the at least one image 211, 215, and 219 on a display 260. For example, the partial image may correspond to the content 210. For example, in a case that the content 210 is an image, a region including the content 210 in the first image 211 may be a partial image to be displayed on the display 260.

In operation 1250, the processor 120 may display another portion of the image on the other electronic device 102 or 103. For example, the processor 120 may display at least one other partial image of the first image 211 selected from the at least one image 211, 215, and 219 on the at least one other electronic device 102 and 103. For example, the processor 120 may transmit at least one other partial region to the at least one other electronic device 102 and 103 such that the at least one other partial image of the first image 211 selected from the at least one image 211, 215, and 219 is displayed.

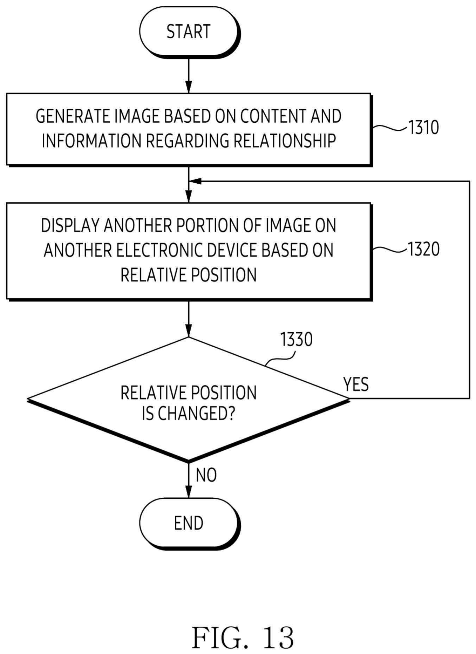

FIG. 13 is a flowchart exemplifying an operation performed by an electronic device according to an embodiment.

FIG. 13 may be described with reference to the components described through FIGS. 1, 2, and 3.

Referring to FIG. 13, in operation 1310, a processor 120 may generate an image based on a content and information regarding a relationship. In an embodiment, the processor 120 may generate at least one image 211, 215, and 219 by inputting a content 210, at least one prompt, and relationship information to a generative AI model 245. For example, in a case that the content 210 is an image, the processor 120 may generate the at least one image 211, 215, and 219 including the content 210. For example, when the content 210 is an image, the processor 120 may generate the at least one image 211, 215, and 219 extending from the content 210.

In operation 1320, the processor 120 may display another portion of the image on another electronic device 102 or 103 based on the relative position. For example, the processor 120 may identify at least one other partial image to be displayed on the at least one other electronic device 102 and 103 in the first image 211 based on position information indicating a positional relationship between an electronic device 101 and the at least one other electronic device 102 and 103. For example, in a case that the at least one other electronic device 102 and 103 is positioned on a left side of the electronic device 101, the processor 120 may identify the at least one other partial image on a left side portion of the first image 211. For example, in a case that the at least one other electronic device 102 and 103 is positioned on a right side of the electronic device 101, the processor 120 may identify the at least one other partial image on a right side portion of the first image 211.

For example, the processor 120 may transmit the at least one other partial image to the at least one other electronic device 102 and 103 such that the at least one other partial image of the first image 211 selected from the at least one image 211, 215, and 219 is displayed.

In operation 1330, the processor 120 may identify a relative position change.

The processor 120 may identify the at least one other electronic device 102 and 103 peripheral to the electronic device 101. The processor 120 may identify the peripheral at least one other electronic device 102 and 103 based on a short-range wireless communication protocol using a communication circuit 290.

The processor 120 may identify position information between the electronic device 101 and the at least one other electronic device 102 and 103. The processor 120 may identify position information indicating a relative position of the at least one other electronic device 102 and 103 based on an information extraction model 245. The processor 120 may identify that a position of the at least one other electronic device 102 and 103 is changed based on the position information of the at least one electronic device 102 and 103. The processor 120 may identify that the relative position of the at least one other electronic device 102 and 103 is changed based on the position information of the at least one other electronic device 102 and 103.

In operation 1330, the processor 120 may perform the operation 1320 again based on the change in the relative position of the at least one other electronic device 102 and 103.

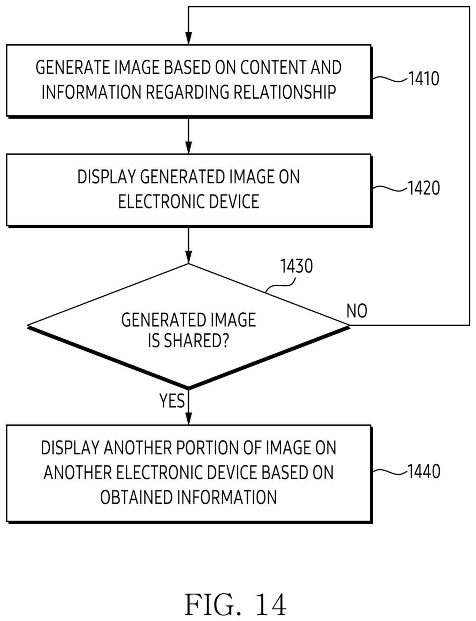

FIG. 14 is a flowchart exemplifying an operation performed by an electronic device according to an embodiment.

FIG. 14 may be described with reference to the components described through FIGS. 1, 2, and 3.

Referring to FIG. 14, in operation 1410, a processor 120 may generate an image based on a content and information regarding a relationship. For example, the processor 120 may generate at least one image 211, 215, and 219 by inputting a content 210, at least one prompt, and relationship information to a generative AI model 249. For example, in a case that the content 210 is an image, the processor 120 may generate the at least one image 211, 215, and 219 including the content 210. For example, when the content 210 is an image, the processor 120 may generate the at least one image 211, 215, and 219 extending from the content 210.

In operation 1420, the processor 120 may display the generated image on an electronic device 101. The processor 120 may display a partial image of the first image 211 selected from the at least one image 211, 215, and 219 on a display 260. For example, the partial image may correspond to the content 210. For example, in a case that the content 210 is an image, a region including the content 210 in the first image 211 may be a partial image to be displayed on the display 260.

In operation 1430, the processor 120 may identify whether the generated image is shared.

The processor 120 may identify a user input to request sharing of the generated image with another electronic device 102 or 103. For example, the user input may include an input for selecting an object included in an image displayed on the display 260. The user input may include an input for moving the selected object. The user input may include an input for moving the selected object out of a screen of the display 260. The user input may include an input for moving the selected object in a direction of the other electronic device 102 or 103.

The processor 120 may transmit data related to the selected object to the other electronic device 102 or 103 in response to the user input requesting sharing. The processor 120 may transmit the data related to the selected object, which causes the other electronic device 102 or 103 to display the selected object based on identifying the user input.

In an embodiment, the other electronic device 102 or 103 may display a screen that queries whether to accept a request from the electronic device 101 in response to receiving the data related to the selected object. For example, the other electronic device 102 or 103 may transmit a response indicating rejection of the request to the electronic device 101 in response to a user input of selecting an object (e.g., cancel) indicating rejection on the query screen. For example, the other electronic device 102 or 103 may transmit a response indicating approval for the request to the electronic device 101 in response to a user input for selecting an object (e.g., confirm) indicating approval on the query screen.

The electronic device 101 may identify whether to share the generated image based on the response indicating the approval for the request from the other electronic device 102 or 103.

For example, the electronic device 101 may identify the generated image as being shared, in response to receiving the response indicating the approval for the request from the other electronic device 102 or 103.

In the operation 1430, based on identifying the generated image as being shared, the processor 120 may perform operation 1440.

In the operation 1440, the processor 120 may display another portion of the image on the other electronic device 102 or 103 based on obtained information.

The processor 120 may transmit an image related to the object selected by the user input to the other electronic device 102 or 103.

The other electronic device 102 or 103 may display an image received from the electronic device 101. For example, the other electronic device 102 or 103 may display the received image as at least one of a home screen, a lock screen, or a wallpaper.

As described above, an electronic device 101 may include a display 260. According to an embodiment, the electronic device 101 may include memory 130 storing instructions. According to an embodiment, the electronic device 101 may include at least one processor 120. According to an embodiment, the instructions may be configured to, when executed by the at least one processor 120, cause the electronic device 101 to identify a content 210 based on a first user input. According to an embodiment, the instructions may be configured to, when executed by the at least one processor 120, cause the electronic device 101 to identify at least one external electronic device 102 and 103 based on a second user input. According to an embodiment, the instructions may be configured to, when executed by the at least one processor 120, cause the electronic device 101 to extract at least one prompt based on identifying the content. According to an embodiment, the instructions may be configured to, when executed by the at least one processor 120, cause the electronic device 101 to obtain relationship information regarding a relationship between the electronic device 101 and the at least one external electronic device 102 and 103. According to an embodiment, the instructions may be configured to, when executed by the at least one processor 120, cause the electronic device 101 to, using a generative artificial intelligence (AI) model, generate an image based on the at least one prompt and the relationship information. According to an embodiment, the instructions may be configured to, when executed by the at least one processor 120, cause the electronic device 101 to display a partial image of the generated image as a background screen of the display 260. According to an embodiment, another partial image 402 or 403 of the image 420 may be displayed on the at least one external electronic device 102 and 103.

According to an embodiment, the background screen may be a wallpaper displayed on the electronic device 101 as a background image on a lock screen and a home screen. According to an embodiment, the lock screen may be a screen displayed on the electronic device 101 in a state where performance of a specific operation of the electronic device 101 is restricted by a user input before user authentication. According to an embodiment, the home screen may be a screen displayed on the electronic device 101 in an idle state where an application is not executed in a foreground.

According to an embodiment, the instructions may be configured to, when executed by the at least one processor 120, cause the electronic device 101 to identify a first image 410 indicating the content 210 based on the first user input. According to an embodiment, the instructions may be configured to, when executed by the at least one processor 120, cause the electronic device 101 to, in response to identifying the first image 410, display, on the display 260, the partial image 401 including the first image 410 of the image 420. A region 430 except for the first image 410 of the image 420 may be generated by the generative AI model 249.

According to an embodiment, the instructions may be configured to, when executed by the at least one processor 120, cause the electronic device 101 to obtain two or more images 211, 215, and 219 generated by the generative AI model 249 based on the at least one prompt and the relationship information. According to an embodiment, the instructions may be configured to, when executed by the at least one processor 120, cause the electronic device 101 to, after obtaining the two or more images 211, 215, and 219, identify the image 420 from the two or more images 211, 215, and 219 based on a third user input. According to an embodiment, the instructions may be configured to, when executed by the at least one processor 120, cause the electronic device 101 to, in response to identifying the image 420, display, on the display 260, the partial image 401.

According to an embodiment, the instructions may be configured to, when executed by the at least one processor 120, cause the electronic device 101 to obtain a preview image 440 indicating a state where the partial image 401 is displayed on the display 260 and the another partial image 402 or 403 is displayed on the at least one external electronic device 102 and 103. According to an embodiment, the instructions may be configured to, when executed by the at least one processor 120, cause the electronic device 101 to, in response to obtaining the preview image 440, display, on the display 260, the preview image 440. According to an embodiment, the instructions may be configured to, when executed by the at least one processor 120, cause the electronic device 101 to, after displaying the preview image 440, display, on the display 260, the partial image 401.

According to an embodiment, the electronic device 101 may further include at least one communication circuit 290. According to an embodiment, the instructions may be configured to, when executed by the at least one processor 120, cause the electronic device 101 to, in response to identifying the content 210, transmit the at least one prompt to at least one server 108 including the generative AI model 249, through the at least one communication circuit 290. According to an embodiment, the instructions may be configured to, when executed by the at least one processor 120, cause the electronic device 101 to, after transmitting the at least one prompt, obtain the partial image 401 from the at least one server 108, through the at least one communication circuit 290.

According to an embodiment, the instructions may be configured to, when executed by the at least one processor 120, cause the electronic device 101 to receive, through the communication circuit 290, a packet including information for positioning from the at least one external electronic device 102 and 103. According to an embodiment, the instructions may be configured to, when executed by the at least one processor 120, cause the electronic device 101 to, based on a packet from the at least one external electronic device 102 and 103, identify position information regarding a position of the at least one external electronic device 102 and 103. According to an embodiment, the instructions may be configured to, when executed by the at least one processor 120, cause the electronic device 101 to, based on the position information, obtain the another partial image 402 or 403. According to an embodiment, the instructions may be configured to, when executed by the at least one processor 120, cause the electronic device 101 to transmit the another partial image 402 or 403 to the at least one external electronic device 102 and 103, through the at least one communication circuit 290.

According to an embodiment, the packet including information for positioning may be a packet based on Bluetooth low energy (BLE) and/or an ultra wide band (UWB).

According to an embodiment, the instructions may be configured to, when executed by the at least one processor 120, cause the electronic device 101 to identify position information regarding a position of the at least one external electronic device 102 and 103. According to an embodiment, the instructions may be configured to, when executed by the at least one processor 120, cause the electronic device 101 to transmit, through the at least one communication circuit 290, the position information to the at least one server 108, such that the at least one server 108 transmits the another partial image 402 or 403 to the at least one external electronic device 102 and 103.

According to an embodiment, the instructions may be configured to, when executed by the at least one processor 120, cause the electronic device 101 to identify the relationship information regarding the relationship between a user of the electronic device 101 and another user of the at least one external electronic device 102 and 103. According to an embodiment, the instructions may be configured to, when executed by the at least one processor 120, cause the electronic device 101 to transmit, through the at least one communication circuit 290, the relationship information between the users to the at least one server 108, such that the at least one server 108 generates the image 420 based on the relationship information between the users.

According to an embodiment, the instructions may be configured to, when executed by the at least one processor 120, cause the electronic device 101 to receive a request for the at least one prompt from the at least one external electronic device 102 and 103, through the at least one communication circuit 290. According to an embodiment, the instructions may be configured to, when executed by the at least one processor 120, cause the electronic device 101 to, after receiving the request, transmit the prompt data to the at least one server 108, through the at least one communication circuit 290.

According to an embodiment, the instructions may be configured to, when executed by the at least one processor 120, cause the electronic device 101 to obtain the at least one prompt based on the content 210. According to an embodiment, the instructions may be configured to, when executed by the at least one processor 120, cause the electronic device 101 to, in response to obtaining the at least one prompt, transmit the at least one prompt to the at least one server 108, through the at least one communication circuit 290.

According to an embodiment, the instructions may be configured to, when executed by the at least one processor 120, cause the electronic device 101 to obtain two or more images 211, 215, and 219 from the at least one server 108, through the at least one communication circuit 290. According to an embodiment, the instructions may be configured to, when executed by the at least one processor 120, cause the electronic device 101 to, based on a third user input, identify the image 420 from among the two or more images 211, 215, and 219 generated by the generative AI model 249 based on different prompts selected from the at least one prompt. According to an embodiment, the instructions may be configured to, when executed by the at least one processor 120, cause the electronic device 101 to, in response to identifying the image 420, transmit a request for the partial image 401 to the at least one server 108, through the at least one communication circuit 290.

According to an embodiment, the at least one prompt may include a plurality of keywords. According to an embodiment, the different prompts may be based on different combinations of the plurality of keywords.

According to an embodiment, the instructions may be configured to, when executed by the at least one processor 120, cause the electronic device 101 to transmit the content 210 to at least one other server 109 including a captioning model 241, through the at least one communication circuit 290. According to an embodiment, the instructions may be configured to, when executed by the at least one processor 120, cause the electronic device 101 to receive prompt data regarding the at least one prompt extracted by the captioning model 241 of the at least one other server 109, through the at least one communication circuit 290.

As described above, a method may be performed in an electronic device 101 including a display 260. According to an embodiment, the method may include identifying a content 210 based on a first user input. According to an embodiment, the method may include identifying at least one external electronic device 102 and 103 based on a second user input. According to an embodiment, the method may include extracting at least one prompt based on identifying the content. According to an embodiment, the method may include obtaining relationship information regarding a relationship between the electronic device 101 and the at least one external electronic device 102 and 103. According to an embodiment, the method may include, using a generative artificial intelligence (AI) model, generating an image based on the at least one prompt and the relationship information. According to an embodiment, the method may include displaying a partial image of the generated image as a background screen of the display 260. According to an embodiment, another partial image 402 or 403 of the image 420 may be displayed on the at least one external electronic device 102 and 103.

As described above, a non-transitory computer readable storage medium may store a program 140 including instructions. According to an embodiment, the instructions may be configured to, when executed by at least one processor 120 of an electronic device 101 including a display 260, cause the electronic device 101 to identify a content 210 based on a first user input. According to an embodiment, the instructions may be configured to, when executed by the at least one processor 120 of the electronic device 101 including the display 260, cause the electronic device 101 to identify at least one external electronic device 102 and 103 based on a second user input. According to an embodiment, the instructions may be configured to, when executed by the at least one processor 120 of the electronic device 101 including the display 260, cause the electronic device 101 to extract at least one prompt based on identifying the content. According to an embodiment, the instructions may be configured to, when executed by the at least one processor 120 of the electronic device 101 including the display 260, cause the electronic device 101 to obtain relationship information regarding a relationship between the electronic device 101 and the at least one external electronic device 102 and 103. According to an embodiment, the instructions may be configured to, when executed by the at least one processor 120 of the electronic device 101 including the display 260, cause the electronic device 101 to, using a generative artificial intelligence (AI) model, generate an image based on the at least one prompt and the relationship information. According to an embodiment, the instructions may be configured to, when executed by the at least one processor 120 of the electronic device 101 including the display 260, cause the electronic device 101 to display a partial image of the generated image as a background screen of the display 260. According to an embodiment, another partial image 402 or 403 of the image 420 may be displayed on the at least one external electronic device 102 and 103.

As described above, a server 108 may include at least one communication circuit 1090. According to an embodiment, the server 108 may include memory 130 storing instructions. According to an embodiment, the server 108 may include at least one processor 1020. According to an embodiment, the instructions may be configured to, when executed by the at least one processor 1020, cause the server 108 to obtain at least one prompt based on a content 210 identified by a first user input of a user of an electronic device 101. According to an embodiment, the instructions may be configured to, when executed by the at least one processor 1020, cause the server 108 to obtain relationship information indicating a relationship between the electronic device 101 and at least one external electronic device 102 and 103 identified by a second user input of the user. According to an embodiment, the instructions may be configured to, when executed by the at least one processor 1020, cause the server 108 to generate an image 420 by a generative artificial intelligence (AI) model 249 based on the at least one prompt and the relationship information. According to an embodiment, the instructions may be configured to, when executed by the at least one processor 1020, cause the server 108 to transmit, through the at least one communication circuit 1090, a partial image 401 of the image 420 to the electronic device 101, such that the electronic device 101 displays the partial image 401 on the electronic device 101. According to an embodiment, the instructions may be configured to, when executed by the at least one processor 1020, cause the server 108 to transmit, through the at least one communication circuit 1090, another partial image 402 or 403 of the image 420 to the at least one external electronic device 102 and 103, such that the at least one external electronic device 102 and 103 displays the another partial image 402 or 403 on the at least one external electronic device 102 and 103.

According to an embodiment, the instructions may be configured to, when executed by the at least one processor 1020, cause the server 108 to receive the content 210 from the electronic device 101 through the at least one communication circuit 1090. According to an embodiment, the instructions may be configured to, when executed by the at least one processor 1020, cause the server 108 to extract the at least one prompt based on the content 210.

According to an embodiment, the instructions may be configured to, when executed by the at least one processor 1020, cause the server 108 to generate a preview image 440 indicating a state where the partial image 401 is displayed on the electronic device 101 and the another partial image 402 or 403 is displayed on the at least one external electronic device 102 and 103. According to an embodiment, the instructions may be configured to, when executed by the at least one processor 1020, cause the server 108 to transmit the preview image 440 to the electronic device 101 through the at least one communication circuit 1090. According to an embodiment, the instructions may be configured to, when executed by the at least one processor 1020, cause the server 108 to, after transmitting the preview image 440, receive a request for the partial image 401 from the electronic device 101 through the at least one communication circuit 1090. According to an embodiment, the instructions may be configured to, when executed by the at least one processor 1020, cause the server 108 to, after receiving the request, through the at least one communication circuit 1090, transmit the partial image 401 to the electronic device 101, and transmit the another partial image 402 or 403 to the at least one external electronic device 102 and 103.

According to an embodiment, the instructions may be configured to, when executed by the at least one processor 1020, cause the server 108 to obtain position information regarding a position of the at least one external electronic device 102 and 103. According to an embodiment, the instructions may be configured to, when executed by the at least one processor 1020, cause the server 108 to identify the another partial image 402 or 403 from the image 420 based on the position information. According to an embodiment, the instructions may be configured to, when executed by the at least one processor 1020, cause the server 108 to transmit the another partial image 402 and 403 to the at least one external electronic device 102 and 103 through the at least one communication circuit 1090.

According to an embodiment, the instructions may be configured to, when executed by the at least one processor 1020, cause the server 108 to obtain the at least one prompt based on a first image 410 indicating the content 210 identified by the first user input. According to an embodiment, the instructions may be configured to, when executed by the at least one processor 1020, cause the server 108 to identify the partial image 401 including the first image 410 in the image 420. According to an embodiment, a region except for the first image 410 of the image 420 may be generated by the generative AI model 249. According to an embodiment, the instructions may be configured to, when executed by the at least one processor 1020, cause the server 108 to transmit the partial image 401 to the electronic device 101 through the at least one communication circuit 1090.

According to an embodiment, the instructions may be configured to, when executed by the at least one processor 1020, cause the server 108 to receive the content 210 from the electronic device 101 through the at least one communication circuit 1090. According to an embodiment, the instructions may be configured to, when executed by the at least one processor 1020, cause the server 108 to transmit a request for the at least one prompt based on the content 210 to at least one other server 108 through the at least one communication circuit 1090. According to an embodiment, the instructions may be configured to, when executed by the at least one processor 1020, cause the server 108 to, after transmitting the request, receive the at least one prompt from the at least one other server 108 through the at least one communication circuit 1090.

According to an embodiment, the instructions may be configured to, when executed by the at least one processor 1020, cause the server 108 to generate two or more images 211, 215, and 219 by the generative AI model 249 based on the at least one prompt. According to an embodiment, the instructions may be configured to, when executed by the at least one processor 1020, cause the server 108 to transmit the two or more images 211, 215, and 219 to the electronic device 101 through the at least one communication circuit 1090. According to an embodiment, the instructions may be configured to, when executed by the at least one processor 1020, cause the server 108 to, after transmitting the two or more images 211, 215, and 219, obtain a request for the partial image 401 of the image 420 from among the two or more images 211, 215, and 219 from the electronic device 101. According to an embodiment, the instructions may be configured to, when executed by the at least one processor 1020, cause the server 108 to, in response to obtaining the request for the partial image 401, through the at least one communication circuit 1090, transmit the partial image 401 to the electronic device 101 and transmit the another partial image 402 or 403 to the at least one external electronic device 102 and 103.

As described above, a method may be performed in a server 108 including at least one communication circuit 1090. According to an embodiment, the method may include obtaining at least one prompt based on a content 210 identified by a first user input of a user of an electronic device 101. According to an embodiment, the method may include obtaining relationship information indicating a relationship between the electronic device 101 and at least one external electronic device 102 and 103 identified by a second user input of the user. According to an embodiment, the method may include generating an image 420 by a generative artificial intelligence (AI) model 249 based on the at least one prompt and the relationship information. According to an embodiment, the method may include transmitting, through the at least one communication circuit 1090, a partial image 401 of the image 420 to the electronic device 101, such that the electronic device 101 displays the partial image 401 on the electronic device 101. According to an embodiment, the method may include transmitting, through the at least one communication circuit 1090, another partial image 402 or 403 of the image 420 to the at least one external electronic device 102 and 103, such that the at least one external electronic device 102 and 103 displays the another partial image 402 or 402 on the at least one external electronic device 102 and 103.

As described above, a non-transitory computer readable storage medium may store a program 140 including instructions. According to an embodiment, the instructions may be configured to, when executed by at least one processor 1020 of a server 108 including at least one communication circuit 1090, cause the server 108 to obtain at least one prompt based on a content 210 identified by a first user input of a user of an electronic device 101. According to an embodiment, the instructions may be configured to, when executed by the at least one processor 1020, cause the server 108 to obtain relationship information indicating a relationship between the electronic device 101 and at least one external electronic device 102 and 103 identified by a second user input of the user. According to an embodiment, the instructions may be configured to, when executed by the at least one processor 1020, cause the server 108 to generate an image 420 by a generative artificial intelligence (AI) model 249 based on the at least one prompt and the relationship information. According to an embodiment, the instructions may be configured to, when executed by the at least one processor 1020, cause the server 108 to transmit, through the at least one communication circuit 1090, a partial image 401 of the image 420 to the electronic device 101, such that the electronic device 101 displays the partial image 401 on the electronic device 101. According to an embodiment, the instructions may be configured to, when executed by the at least one processor 1020, cause the server 108 to transmit, through the at least one communication circuit 1090, another partial image 402 or 403 of the image 420 to the at least one external electronic device 102 and 103, such that the at least one external electronic device 102 and 103 displays the another partial image 402 or 403 on the at least one external electronic device 102 and 103.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101), comprising:
a display (260),
memory (130) storing instructions, and
at least one processor (120), wherein the instructions are configured to, when executed by the at least one processor (120), cause the electronic device (101) to:
identify a content (210) based on a first user input,
identify at least one external electronic device (102, 103) based on a second user input,
extract at least one prompt based on identifying the content,
obtain relationship information regarding a relationship between the electronic device and the at least one external electronic device,
using a generative artificial intelligence (AI) model, generate an image based on the at least one prompt and the relationship information, and
display a partial image (401) of the generated image (420) as a background screen of the display (260),
wherein another partial image (402, 403) of the image (420) is displayed on the at least one external electronic device (102, 103).

2. The electronic device of claim 1
wherein the instructions are configured to, when executed by the at least one processor (120), cause the electronic device (101) to:
identify a first image (410) indicating the content (210) based on the first user input, and
in response to identifying the first image (410), display, on the display (260), the partial image (401) including the first image (410) of the image (420),
wherein a region except (430) for the first image (410) of the image (420) is generated by the generative AI model (249).

3. The electronic device of claim 1 or claim 2,
wherein the instructions are configured to, when executed by the at least one processor (120), cause the electronic device (101) to:
obtain two or more images (211, 215, 219) generated by the generative AI model (249) based on the at least one prompt and the relationship information,
after obtaining the two or more images, identify the image (420) from the two or more images (211, 215, 219) based on a third user input, and
in response to identifying the image (420), display, on the display (260), the partial image (401).

4. The electronic device of any one of claims 1 to 3,
wherein the instructions are configured to, when executed by the at least one processor (120), cause the electronic device (101) to:
obtain a preview image (440) indicating a state where the partial image (401) is displayed on the display (260) and the another partial image (402, 403) is displayed on the at least one external electronic device (102, 103),
in response to obtaining the preview image (440), display, on the display (260), the preview image (440), and
after displaying the preview image (440), display, on the display (260), the partial image (401).

5. The electronic device of any one of claims 1 to 4, further comprising:
at least one communication circuit (290),
wherein the instructions are configured to, when executed by the at least one processor (120), cause the electronic device (101) to:
in response to identifying the content (210), transmit the at least one prompt to at least one server (108) including the generative AI model, through the at least one communication circuit (290), and
after transmitting the at least one prompt, obtain the partial image (401) from the at least one server (108), through the at least one communication circuit (290).

6. The electronic device of any one of claims 1 to 5,
wherein the instructions are configured to, when executed by the at least one processor (120), cause the electronic device (101) to:
identify position information regarding a position of the at least one external electronic device (102, 103),
based on the position information, obtain the another partial image (402, 403), and
transmit the another partial image (402, 403) to the at least one external electronic device (102, 103), through the at least one communication circuit (290).

7. The electronic device of any one of claims 1 to 6, comprising
at least one communication circuit (290),
wherein the instructions are configured to, when executed by the at least one processor (120), cause the electronic device (101) to:
receive, through the at least one communication circuit (290), a packet including information for positioning from the at least one external electronic device (102, 103),
based on a packet from the at least one external electronic device (102, 103), identify position information regarding a position of the at least one external electronic device (102, 103), and
transmit, through the at least one communication circuit (290), the position information to the at least one server (108), such that the at least one server (108) transmits the another partial image (402, 403) to the at least one external electronic device (102, 103).

8. The electronic device of any one of claims 1 to 7,
wherein the instructions are configured to, when executed by the at least one processor (120), cause the electronic device (101) to:
identify the relationship information regarding the relationship between a user of the electronic device (101) and another user of the at least one external electronic device (102, 103), and
transmit, through the at least one communication circuit (290), the relationship information between the users to the at least one server (108), such that the at least one server (108) generates the image (420) based on the relationship information between the users.

9. The electronic device of any one of claims 1 to 8,
wherein the instructions are configured to, when executed by the at least one processor (120), cause the electronic device (101) to:
receive a request for the at least one prompt from the at least one external electronic device (102, 103), through the at least one communication circuit (290), and
after receiving the request, transmit prompt data to the at lest one server (108), through the at least one communication circuit (290).

10. The electronic device of any one of claims 1 to 9,
wherein the instructions are configured to, when executed by the at least one processor (120), cause the electronic device (101) to:
obtain the at least one prompt based on the content (210), and
in response to obtaining the at least one prompt, transmit the at least one prompt to the at least one server (108), through the at least one communication circuit (290).

11. The electronic device of any one of claims 1 to 10,
wherein the instructions are configured to, when executed by the at least one processor (120), cause the electronic device (101) to:
obtain two or more images (211, 215, 219) from the at least one server (108), through the at least one communication circuit (290),
based on a third user input, identify the image (420) from the two or more images (211, 215, 219) generated by the generative AI model (249) based on different prompts selected from the at least one prompt, and
in response to identifying the image (420), transmit a request for the partial image (401) to the at least one server, through the at least one communication circuit (290).

12. The electronic device of any one of claims 1 to 11,
wherein the instructions are configured to, when executed by the at least one processor (120), cause the electronic device (101) to:
transmit the content (210) to at least one other server (109) including a captioning model (241), through the at least one communication circuit (290), and
receive prompt data regarding the at least one prompt extracted by the captioning model (241) of the at least one other server (109), through the at least one communication circuit (290).

13. A server (108), comprising:
at least one communication circuit (1090),
memory (1030) storing instructions, and
at least one processor (1020), wherein the instructions are configured to, when executed by the at least one processor (1020), cause the server (108) to:
obtain at least one prompt based on a content (210) identified by a first user input of a user of an electronic device (101),
obtain relationship information indicating a relationship between the electronic device (101) and at least one external electronic device (102, 103) identified by a second user input of the user,
generate an image (420) by a generative artificial intelligence (AI) model (249) based on the at least one prompt and the relationship information,
transmit, through the at least one communication circuit (1090), a partial image (401) of the image (420) to the electronic device (101), such that the electronic device (101) displays the partial image (401) on the electronic device (101), and
transmit, through the at least one communication circuit (1090), another partial image (402, 403) of the image (420) to the at least one external electronic device (102, 103), such that the at least one external electronic device (102, 103) display (260)s the another partial image (402, 403) on the at least one external electronic device (102, 103).

14. A non-transitory computer readable storage medium, storing
a program (140) including instructions,
wherein the instructions are configured, when executed by at least one processor (120) of an electronic device (101) including a display (260), to cause the electronic device (101) to:
identify a content (210) based on a first user input,
identify at least one external electronic device (102, 103) based on a second user input,
extract at least one prompt based on identifying the content,
obtain relationship information regarding a relationship between the electronic device and the at least one external electronic device,
using a generative artificial intelligence (AI) model, generate an image (420) based on the at least one prompt and the relationship information, and
display a partial image (401) of the generated image (420) as a background screen of the display (260),
wherein another partial image (402, 403) of the image (420) is displayed on the at least one external electronic device (102, 103).

15. A non-transitory computer readable storage medium, storing
a program including instructions,
wherein the instructions are configured, when executed by at least one processor (1020) of a server including at least one communication circuit (1090), to cause the server (108) to:
obtain, at least one prompt based on a content (210) identified by a first user input of a user of an electronic device (101),
obtain relationship information indicating a relationship between the electronic device (101) and at least one external electronic device (102, 103) identified by a second user input of the user,
when executed by the at least one processor (1020), generate an image (420) by a generative artificial intelligence (AI) model (249) based on the at least one prompt and the relationship information,
transmit, through the at least one communication circuit (1090), a partial image (401) of the image (420) to the electronic device (101) to display the partial image (401) on the electronic device (101), and
transmit, through the at least one communication circuit (1090), another partial image (402, 403) of the image (420) to the at least one external electronic device (102, 103), such that the at least one external electronic device (102, 103) displays the another partial image (402, 403) on the at least one external electronic device (102, 103).
